(19) Europäisches Patentamt
European Patent Office
Office européen des brevets

(11) **EP 2 737 618 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(21) Anmeldenummer: **12732790.6**

(22) Anmeldetag: **28.06.2012**

(51) Int Cl.:
*H02M 7/49* (2007.01)     *H02M 3/158* (2006.01)
*H02M 7/483* (2007.01)

(86) Internationale Anmeldenummer:
**PCT/EP2012/002727**

(87) Internationale Veröffentlichungsnummer:
**WO 2013/017186 (07.02.2013 Gazette 2013/06)**

(54) **ELEKTRISCHES UMRICHTERSYSTEM**

ELECTRICAL CONVERTER SYSTEM

SYSTÈME DE CONVERTISSEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2011 DE 102011108920**

(43) Veröffentlichungstag der Anmeldung:
**04.06.2014 Patentblatt 2014/23**

(60) Teilanmeldung:
**19153765.3**

(73) Patentinhaber: **Technische Universität München**
**80333 München (DE)**

(72) Erfinder:
• **GÖTZ, Stefan, M.**
**85659 Forstern (DE)**
• **WEYH, Thomas**
**80637 München (DE)**

(74) Vertreter: **Lucke, Andreas**
**Boehmert & Boehmert**
**Anwaltspartnerschaft mbB**
**Pettenkoferstrasse 22**
**80336 München (DE)**

(56) Entgegenhaltungen:
WO-A1-2008/046772     WO-A1-2009/135528
WO-A2-03/090331     WO-A2-2012/072168

• **BARNES A.ET AL: "IMPLEMENTATION OF A THREE-PHASE MULTILEVEL BOOSTING INVERTER USING SWITCHED-CAPACITOR CONVERTER CELLS", IEEE ENERGY CONVERSION CONGRESS AND EXPOSITION (ECCE), 12 September 2010 (2010-09-12), - 16 September 2010 (2010-09-16), pages 2141-2147,**
• **GABRIELE GRANDI ET AL: "Dual inverter space vector modulation with power balancing capability", EUROCON 2009, EUROCON '09. IEEE, IEEE, PISCATAWAY, NJ, USA, 18 May 2009 (2009-05-18), pages 721-728, XP031491931, ISBN: 978-1-4244-3860-0**

**Beschreibung**

Die Erfindung betrifft ein elektrisches Umrichtersystem sowie ein entsprechendes Verfahren. Derartige Umrichter haben sehr vielfältige Einsatzmöglichkeiten. Sie können beispielsweise zur gesteuerten Stromversorgung elektrischer Maschinen, aber auch zur Anbindung von Gleichstromquellen (Batteriespeicher, Solaranlagen) an ein Wechselstromnetz verwendet werden. Bisherige modulare Multilevelkonvertertopologien arbeiten prinzipiell nur mit der Seriellschaltung von Modulen und deren Energiespeichern, wobei üblicherweise Kondensatoren als Energiespeicher verwendet werden.

HINTERGRUND DER ERFINDUNG

Halbleiterstromrichter, beispielsweise in Form von Leistungsreglern, Wechselrichtern oder Umrichtern, bilden seit Jahren ein zentrales Element der Leistungselektronik. Das Anwendungsfeld erstreckt sich dabei auf alle Leistungsklassen. In Motoren wurden mechanische Kommutatoren durch elektronische Schaltungen ersetzt, Transformatoren wurden in vielen Anwendungen entweder überflüssig oder deren Leistungsfluss bei gleicher Größe (durch die Erzeugung höherer Frequenzen) um Größenordnungen erhöht. Diverse Anwendungen wurden überhaupt erst durch die elektronische Umrichtung ermöglicht oder finanzierbar. Verteilte Einspeisung mit Photovoltaikanlagen in das Ortsnetz zählt dazu ebenso wie die Gleichstromübertragung und Kopplung an Wechselspannungsnetze bei höherem Leistungsfluss (ohne den Einsatz von mechanischen Umformersätzen).

Trotzdem verfügen diese Systeme über mehrere bisher nur unzureichend gelöste Probleme. Linearregler sind bereits bei mittleren Leistungsflüssen aufgrund ihrer starken Energieverluste nicht tolerierbar. Das Zurückgreifen auf getaktete Schaltschemata in Verbindung mit strom- bzw. spannungs-begrenzenden Bauteilen mit einer Dynamik erster Ordnung führt dagegen zur Erzeugung enormer Oberwellen und einerseits der gleichzeitigen Abstrahlung durch eben jene letztgenannten Elemente, andererseits zu sich ausbreitenden Schwingungen auf den Leitungen selbst. Insbesondere reagieren diverse Leistungshalbleiter, beispielsweise SCR und GTO, selbst sehr labil auf schnelle Spannungsdynamik. Kommutierungsprobleme im Umrichter von Netzkopplungen oder Überkopfzünden in Thyristoren erzwingen äußerst aufwändige Filtermaßnahmen, die in der Regel mit der Umsetzung der höheren Harmonischen in Wärme arbeiten.

Darüber hinaus lassen sich Leistungshalbleiter nur für relativ niedrige Spannungen von wenigen Kilovolt sinnvoll herstellen und einsetzen. Für hohe Anforderungen an Spannung, Leistung, Oberwellenanteile, Verzerrung und insbesondere auch Ausfallsicherheit richtet sich der Fokus fast ausschließlich auf Multilevelkonverter-Systeme. Unangefochten dabei ist die allgemein bekannte modulare Variante, der modulare Multilevelkonverter, wie er in DE 102 17 889 A1 genauer beschrieben ist.

Dieses Umrichter-System ist in der Lage nahezu beliebige zeitliche Spannungsverläufe von den Klemmenpaaren der einen Seite in ebenso beliebige Verläufe zwischen den Klemmenpaaren der anderen Seite umzusetzen, ohne dabei seinem Prinzip nach zwischen einem Ein- und einem Ausgang unterscheiden zu müssen. Bei diesem modularen Multilevelkonverter wird jede Phase des Umrichters aus einer Vielzahl von in Serie geschalteten identischen Einzelmodulen aufgebaut. Jedes Einzelmodul fungiert als ein Zweipol und enthält ein Energiespeicherelement in Form eines Kondensators, sowie mehrere Schaltelemente, die für beide Spannungsrichtungen wahlweise Strom aufnehmen oder abgeben können und damit alle vier Quadranten des Strom-Spannungs-Graphen erreichen. Insbesondere können diese Einzelmodule über ihre Schalter in die folgenden vier Zustände geschaltet werden:

- Vorgabe einer positiven Klemmenspannung bei beliebiger Stromrichtung;

- Vorgabe einer negativen Spannung mit beliebiger Stromrichtung;

- Bypasszustand (d. h. keine Energieaufnahme oder -abgabe durch das Einzelmodul), freier Stromfluss in beliebiger Richtung;

- Erzwingen einer Energieaufnahme durch das Einzelmodul unter Aufzwingen des Spannungsniveaus.

Ein solches Einzelmodul ist somit - bei entsprechender Steuerung beispielsweise mit getaktetem Schalten der aktiven Elemente (ggf. in Analogie zur Pulsweitenmodulation) - bereits in der Lage seine Energieaufnahme und -abgabe beliebig zu steuern und einer Quelle eine virtuelle Last mit bestimmten Eigenschaften näherungsweise vorzutäuschen Diese Module können nun je nach Anwendungswunsch für n Quellen (beispielsweise zwei einlaufende Spannungssysteme) und m Ausgänge (beispielsweise ein Dreiphasenniederspannungssystem) für vollen Vierquadrantenbetrieb verschaltet werden.

Eine Kombination zweier Serienschaltungen aus jeweils z Modulen wird dabei als Phasenmodul bezeichnet, wobei die beiden Serienschaltungen jeweils einen sogenannten Brückenzweig bilden. Die Anzahl z der Module in jedem Brückenzweig definiert Spannungs- und Oberwelleneigenschaften des Umrichters. Die Phasenmodule wiederum bilden die Grundbausteine eines ein- oder mehrphasigen Stromrichters. So kann beispielsweise durch zwei zusammengeschaltete Phasenmodule ein System zur Umwandlung einer 1-phasigen Wechselspannung bzw. einer Gleichspannung in eine andere 1-phasige Wechselspannung bzw. eine Gleichspannung verwendet werden. Der Aufbau eines solchen Systems ist dabei vollkommen symmetrisch bezüglich der Ein- bzw. Ausgänge und ermöglicht somit gegenüber jedem Anschlusspaar einen vollständigen Vierquadrantenbetrieb. Weiterhin kann sowohl eingangsseitig aus auch ausgangsseitig des Verhalten des Stromrichters bzgl. induktivem oder kapazitivem Verhalten individuell angepasst werden. Der Energiefluss ist somit auch in beide Richtungen möglich und kann dynamisch verändert werden.

Weiterhin kann beispielsweise durch drei zusammengeschaltete Phasenmodule ein System zur Umwandlung einer 3-phasigen Wechselspannung in eine 1-phasige Wechselspannung bzw. eine Gleichspannung realisiert werden. Die zusammengefassten Anschlüsse der Phasenmodule können auch als sogenannte (Gleichspannungs-) Sammelschiene betrachtet werden, so dass durch Zusammenschalten von n + m Phasenmodulen eine Netzkupplung für die Kopplung eines n-phasiges Netzes mit einem m-phasigen Netz entsteht.

Trotz der enormen Vorzüge der letztgenannten, darunter - ohne Anspruch auf Vollständigkeit - die hohe Ausfallsicherheit wegen des integrierten Redundanzaufbaus, prinzipiell bereits automatische Spannungssymmetrierung der Module und Halbleiter, vollständiger Vierquadrantenbetrieb, fest definierte maximal nötige Sperrspannungen für alle Halbleiter weit unter der Maximalspannung der Klemmenpaare des Gesamtsystems, besitzt auch diese Topologie noch einige nur unzureichend gelöste Probleme. Einige dieser Schwachstellen, wie beispielsweise die nötige enorme Überauslegung, werden mit der Technik, die in der zum Zeitpunkt der vorliegenden Anmeldung noch nicht veröffentlichten Anmeldung DE 10 2010 052 934.6 beschrieben ist, überwunden. Die hier beschriebene Verbesserung bot bereits die Möglichkeit, die neuen Module und deren Speicher durch die hinzukommenden Schaltzustände effektiver zu nutzen und gegebenenfalls sogar einen Ladungsausgleich zwischen den Modulen zu ermöglichen. Letzteres war jedoch nicht primäres Ziel.

In dieser noch nicht veröffentlichten Anmeldung DE 10 2010 052 934.6 wird eine spezielle Variante des modularen Multilevelconverters beschrieben, der ebenfalls aus mehreren Einzelmodulen aufgebaut ist, aber zusätzlich so ausgeführt ist, dass die als Energiespeicherelemente verwendeten Kondensatoren wahlweise parallel oder seriell geschaltet werden können. Die Einzelmodule sind dabei so ausgelegt, dass über interne Schaltelemente wahlweise ein paralleles oder serielles Schalten der Energiespeicherelemente möglich ist, so dass keine zusätzlichen externen Schalter wie bei der Matrixadressierung erforderlich sind.

Gleichzeitig gewährleistet diese beschriebene Technik, dass die Spannungsbelastung der internen Schaltelemente nicht wesentlich über der Maximalspannung der Kondensatoren liegt.

Der grundlegende Vorteil einer solchen wahlweisen Verschaltung liegt darin, dass eine Parallelschaltung der Energiespeicherelemente der Einzelmodule den Gesamtinnenwiderstand des Umrichters (oder eines Zweiges des Umrichters) verringern, so dass der Umrichter in diesem Schaltzustand ein Vielfaches mehr an Leistung bereitstellen kann, als dies bisherige Umrichter bei niedrigen Ausgangsspannungen können. Weiterhin können damit je nach Anwendungsfall auch die Kondensatoren in den Einzelmodulen verkleinert werden. Weiterhin kann ein solches System auch mit hoher Effizienz Gleich- und Wechselspannungen im Umrichterbetrieb von der Quelle zur Last erhöhen, in dem bei Energieaufnahme aus der Quelle viele Modul-Kondensatoren parallel geschaltet werden und anschließend bei der Energieabgabe diese Kondensatoren entsprechend in Reihe geschaltet werden.

Bei dieser Schaltung kann allerdings das Problem eines verlustreichen Ladungsausgleiches auftreten. Die Umschaltung von seriellem Betrieb einzelner Modul-Kondensatoren in einen parallelen Betrieb sollte bei dieser Umrichter-Variante vorzugsweise nur dann erfolgen, wenn die einzelnen Spannungen der parallel zu schaltenden Kondensatoren nahezu gleich sind. Andernfalls findet ein Ladungsausgleich mit Energieverlusten statt, wie im folgenden Beispiel gezeigt wird:

Gegeben seien Module mit den zwei Kondensatoren 1 und 2, wobei der erste Kondensator die Kapazität $C_1$ und die Spannung $U_1$ hat, und der zweite Kondensator die Kapazität $C_2$ und die Spannung $U_2$.

Durch das Parallelschalten der beiden Module bzw. ihrer Kondensatoren ergibt sich eine neue Kapazität $C_{ges}$ = $C_1 + C_2$.

Gleichzeitig muss aber die Ladung $Q_{ges,neu}$ des Gesamtsystems erhalten bleiben, so dass sich die neue Ladung aus der Summe der beiden Teilladungen der Kondensatoren $C_1$ und $C_2$ ergibt:

$$Q_{ges,neu} = Q_1 + Q_2 = C_1 \cdot U_1 + C_2 \cdot U_2$$

Über diese Gesamtladung lässt sich einerseits die Spannung des Systems der parallelgeschalteten Kondensatoren bestimmen zu

3

$$U_{neu} = \frac{Q_{ges,neu}}{C_{ges}} = \frac{C_1 \cdot U_1 + C_2 \cdot U_2}{C_1 + C_2};$$

andererseits ergibt sich die im System der parallelgeschalteten Kondensatoren gespeicherte Energie $E_{ges}$ zu:

$$E_{ges} = \frac{1}{2} C_{ges} \cdot U_{ges}^2 = \frac{1}{2} \cdot \frac{(C_1 \cdot U_1 + C_2 \cdot U_2)^2}{C_1 + C_2}$$

Wenn $U_1 \neq U_2$, dann ist diese Energie kleiner als die vorher in den einzelnen Kondensatoren gespeicherte Energie:

$$E_{ges} \leq \frac{1}{2} C_1 \cdot U_1^2 + \frac{1}{2} C_2 \cdot U_2^2$$

Die Energiedifferenz zur vorher in den beiden Kondensatoren gespeicherten Energie ergibt sich zu

$$\Delta E = \frac{1}{2} \cdot \frac{C_1 \cdot C_2}{C_1 + C_2} \cdot \Delta U^2,$$

wobei $\Delta U$ die Differenz der beiden Kondensatorspannungen darstellt. Diese Energiedifferenz geht während des Parallelschalt-Prozesses verloren und hängt quadratisch von der Spannungsdifferenz der Kondensatoren ab.
Wenn beispielsweise das Parallelschalten der Kondensatoren über einen Widerstand erfolgt, wird diese Energiedifferenz im Widerstand in Wärme umgewandelt. Da die Energiedifferenz nicht vom Wert des Widerstandes abhängt, verändert sich durch unterschiedliche Widerstandswerte nur der Strom, die Leistung und die Umladezeit.
Speziell bei den genannten Umrichterschaltungen müsste ein solcher Parallelschaltvorgang allerdings mit sehr kleinen (Schutz-)Widerständen erfolgen, da sonst diese Widerstände - welche sich permanent im Strompfad des Umrichters befinden - zu hohen Verlusten des Stromrichters führen. Dies wiederum führt zu hohen Umladeströmen, welche die Halbleiterschalter des Umrichters stark belasten können.
Für ein System aus n parallel zu schaltenden Modulen ergibt sich entsprechend nach dem Parallelschalten eine Spannung zu:

$$U_{neu} = \frac{\sum_i C_i \cdot U_i}{\sum_i C_i}$$

Die Energiedifferenz $\Delta E_n$ zwischen der Summe der einzelnen Kondensatorenergien und der Energie des parallel geschalteten Systems ergibt sich zu:

$$\Delta E_n = \frac{1}{2}\left( \sum_i C_i \cdot U_i^2 - \frac{\left(\sum_i C_i \cdot U_i\right)^2}{\sum_i C_i} \right)$$

Bei Umrichtern nach der Technik, die in der zum Zeitpunkt der vorliegenden Anmeldung noch nicht veröffentlichten Anmeldung DE 10 2010 052 934.6 beschrieben ist, muss daher im Betrieb darauf geachtet werden, dass die Spannungsdifferenzen zwischen parallel zu schaltenden Kondensatoren nie zu große Werte annehmen bzw. in solchen Fällen nur selten parallel geschaltet wird. Gerade bei Systemen mit hohen Modulspannungen und schneller Taktung bzw. häufigem Wechsel von serieller zu paralleler Schaltung der Modul-Kondensatoren führt dies zu unnötig hohen Umladeverlusten.

## STAND DER TECHNIK

GABRIELE GRANDI ET AL: "Dual inverter space vector modulation with power balancing capability", EUROCON 2009, EUROCON '09. IEEE, IEEE, PISCATAWAY,NJ, USA, 18. Mai 2009 (2009-05-18), Seiten 721-728, offenbart eine duale 2-Level Umrichter-Topologie, bestehend aus zwei Standard 2-Level U-Umrichtern, die von DC-Quellen mit Spannung versorgt werden. Der Umrichter verfügt somit über zwei Spannungslevel und kann insgesamt neun Phasenspannungen erzeugen.

In der WO 2009/135528 A1 ist ein U-Umrichter offenbart, der mindestens einen Arm hat, der mit entgegengesetzten Polen einer DC-Spannungsseite des Umrichters verbunden ist, und eine Reihenschaltung von Schaltmodulen aufweist, die jeweils einen Eingang, einen Ausgang und einen Kondensator enthalten. Zwischen die Module sind Induktivitäten als Drosselspulen geschaltet.

Die WO 2008/046772 offenbart eine Umrichterschaltung zu Schaltung einer Vielzahl von Schaltspannungsniveaus, bei der für jede Phase eine erste Schaltgruppe vorgesehen ist. Zur Verringerung der gespeicherten Energie der Umrichterschaltung sowie zur Platzeinsparung sind n zweite Schaltgruppen vorgesehen, welche jeweils sechs ansteuerbare bidirektionale Leistungshalbleiterschalter und einen Kondensator aufweisen. Jede der n zweiten Schaltgruppen ist mit der jeweils benachbarten zweiten Schaltgruppe verkettet, und die erste Schaltgruppe ist mit der ersten zweiten Schaltgruppe verbunden. Schließlich sind eine dritte Schaltgruppe und eine vierte Schaltgruppe vorgesehen, wobei die dritte Schaltgruppe mit der n-ten zweiten Schaltgruppe verbunden ist, die vierte Schaltgruppe mit der n-ten zweiten Schaltgruppe verbunden ist, und die dritte Schaltgruppe mit der vierten Schaltgruppe verbunden ist.

## ÜBERSICHT ÜBER DIE ERFINDUNG

Daher ist es die Aufgabe der vorliegenden Erfindung, bei den Kondensatoren eines modular aufgebauten Umrichters mit der Möglichkeit einer Umschaltung von seriellem auf parallelen Betrieb der Kondensatoren für einen Ladungsausgleich dergestalt zu sorgen, dass unmittelbar vor einer Parallelschaltung von Kondensatoren die entsprechenden Kondensatorspannungen verlustarm einander angeglichen werden. Dabei sollen vorzugsweise wahlweise mindestens zwei und maximal alle Kondensatoren eines Brückenzweiges eines solchen modularen Umrichters parallel geschaltet werden können.

Erfindungsgemäß wird diese Aufgabe durch ein elektrisches Umrichtersystem nach Anspruch 1 oder 4 und durch ein Verfahren zur Ansteuerung eines Umrichters zur Steuerung von Strömen und Spannungen nach Anspruch 14 oder 15 gelöst. Die Unteransprüche definieren bevorzugte und vorteilhafte Ausführungsformen der vorliegenden Erfindung.

Die Erfindung basiert auf der Erkenntnis, dass einerseits ein modulares Umrichtersystem mit wahlweiser Parallel- bzw. Seriell-Schaltung der Speicherkondensatoren große Vorteile bietet, andererseits diese Vorteile nur dann vollständig genutzt werden können, wenn vor einer geplanten Parallelschaltung der Speicherkondensatoren die entsprechenden Kondensatorspannungen aneinander angeglichen werden.

Im Rahmen der vorliegenden Erfindung wird ein Elektrisches Umrichtersystem für Stromversorgungen, bestehend aus mindestens zwei gleichartigen hintereinander geschalteten Modulen bereitgestellt. Jedes Modul weist dabei mindestens 4 Anschlüsse auf, um über jeweils mindestens zwei Anschlüsse mit seinem rechten und linken Nachbarmodul verbunden werden zu können. Weiterhin weist jedes Modul mindestens einen Modul-Kondensator zur Energiespeicherung und Schaltelemente auf. Über diese Schaltelemente können die beiden Anschlüsse des Modul-Kondensators elektrisch mit den jeweiligen Anschlüssen des Moduls verbunden werden. Auf diese Weise können die Modul-Kondensatoren der Module über die Schaltelemente wahlweise in Serie als auch parallel geschaltet werden. Insbesondere können einzelne Modul-Kondensatoren des Umrichters in Serie und gleichzeitig weitere Modul-Kondensatoren parallel geschaltet werden, so dass die gebildete Serienschaltung in Serie zu der ebenfalls gebildeten Parallelschaltung liegt. Weiterhin können durch entsprechende Einstellung der Schaltelemente auch einzelne Modul-Kondensatoren aus der Verschaltung ausgenommen werden, so dass die entsprechenden Module zwar ihr linkes benachbartes Modul elektrisch mit dem rechten benachbarten Modul verbinden, ihr eigener Modul-Kondensator dabei aber weder geladen noch entladen wird.

Zusätzlich befinden sich jeweils zwischen zwei benachbarten Modulen gleichartige Zwischenmodule, welche mindestens aus einer Induktivität zur Energiespeicherung bestehen und noch weitere Anschlüsse enthalten können. Benachbarte Module sind somit jeweils über mindestens einen ihrer Anschlüsse über die Anschlüsse des dazwischenliegenden Zwischenmoduls elektrisch miteinander verbunden und können weiterhin noch über weitere ihrer Anschlüsse auch direkt miteinander verbunden sein.

Die Zwischenmodule mit ihren Induktivitäten können zusammen mit den Schaltelementen für einen Energie- und Ladungstransport zwischen den Modul-Kondensatoren sorgen. Dabei werden die entsprechenden Schaltelemente so gesteuert, dass ein Teil der Energie eines Modul-Kondensators über die Induktivität des angrenzenden Zwischenmoduls zu einem benachbarten Modul-Kondensator übertragen wird. Größere Energiemengen lassen sich auch über kleine Induktivitäten nach dem Prinzip eines Schaltwandlers von einem Modul-Kondensator auf den nächsten in kleinen Portionen übertragen. Insbesondere können auf diese Weise die Spannungen zweier oder mehrerer Modul-Kondensatoren, die parallel geschaltet werden sollen vor der Parallelschaltung verlustarm angleichen.

Vorzugsweise werden die Endpunkte einer solchen Hintereinanderschaltung von Modulen und Zwischenmodulen durch jeweils einen Anschluss eines am Ende liegenden Moduls oder durch das Zusammenschließen von mindestens zwei Anschlüssen des am Ende liegenden Moduls gebildet. Auf diese Weise kann ein sogenannter Brückenzweig eines Umrichters gebildet werden, wobei jeweils zwei in Serie geschaltete Brückenzweige beispielsweise ein Phasenmodul eines ein- oder mehrphasigen Umrichters bilden. Die Spannung an den Endpunkten einer solchen Hintereinanderschaltung ergibt sich aus der Summe der Teilspannungen von einzelnen Serien- und Parallelschaltungen von Modul-Kondensatoren innerhalb der Hintereinanderschaltung.

Um den Ladungsausgleich zwischen Kondensatoren benachbarter Module zu gewährleisten, arbeiten die Schaltelemente zusammen mit der Induktivität des jeweiligen Zwischenmoduls und den Kondensatoren nach dem Prinzip eines Schaltwandlers. Beispielsweise kann über die Schaltelemente zwischen einem ersten Kondensator und der Induktivität ein Stromkreis geschlossen werden, so dass der Stromfluss in der Induktivität ansteigt. Dadurch wird Energie vom ersten Kondensator in die Spule in Form magnetischer Feldenergie übertragen. Durch entsprechendes Umschalten kann in einem weiteren Schritt ein Stromkreis zwischen der Induktivität und dem zweiten Kondensator geschlossen werden, so dass der Stromfluss durch die Spule nicht unterbrochen wird. Die Energie der Induktivität kann nun teilweise oder vollständig von der Induktivität in den zweiten Kondensator übertragen werden. Durch mehrmaliges Wiederholen dieser Schaltvorgänge kann auch bei Verwendung sehr kleiner Induktivitäten ein Ladungstransfer zwischen den Kondensatoren gewährleistet werden. Dieser Ladungstransfer kann entweder so stattfinden, dass die Spannungen benachbarter Kondensatoren einander angeglichen werden; weiterhin kann der Ladungstransfer aber auch so ausgeführt werden, dass sich die Spannungsdifferenz zwischen benachbarten Kondensatoren vergrößert. Insbesondere kann dieses Verfahren auch verwendet werden um die Spannungen zweier Modul-Kondensatoren anzugleichen, welche nicht in unmittelbar benachbarten Modulen lokalisiert sind. Beispielsweise können bei drei hintereinanderliegenden Modulen A, B und C die entsprechenden Modul-Kondensatoren $C_A$, $C_B$ und $C_C$ so umgeladen werden, dass die Spannungen von $C_A$ und $C_C$ einander angeglichen werden, ohne das die Spannung von $C_B$ angeglichen wird. In diesem Fall kann beispielsweise Ladung von $C_A$ über das Zwischenmodul zwischen A und B zunächst zu $C_B$ und anschließend über das Zwischenmodul zwischen B und C weiter zu $C_C$ übertragen werden. Auf diese Weise kann im Prinzip mit der erfindungsgemäßen Vorrichtung Ladung und Energie von jedem Kondensator einer Hintereinanderschaltung zu einem beliebigen anderen Kondensator übertragen werden.

In einer bevorzugten Ausführungsform der vorliegenden Erfindung können die Zwischenmodule lediglich aus einer Induktivität bestehen. Die erfindungsgemäßen Module umfassen zusätzlich zum Modul-Kondensator jeweils zwei Serienschaltungen von je drei Schaltelementen, wobei diese Serienschaltungen parallel zum Modul-Kondensator liegen. Jede dieser Serienschaltungen enthält somit zwei Verbindungspunkte zwischen zwei aufeinanderfolgenden Schaltern. Diese bilden die vier Anschlüsse des Moduls, wobei jeweils einer dieser vier Anschlüsse direkt mit einem Anschluss eines benachbarten Moduls verbunden ist und jeweils einer dieser vier Anschlüsse über einen Anschluss der Induktivität mit dem Anschluss eines benachbarten Moduls verbunden ist. Weiterhin kann auch noch ein weiteres Schaltelement innerhalb des Zwischenmoduls parallel zur Induktivität befinden und im eingeschalteten Zustand diese überbrücken.

In einer weiteren bevorzugten Ausführungsform der vorliegenden Erfindung bestehen die Zwischenmodule ebenfalls lediglich aus einer Induktivität. Die erfindungsgemäßen Module umfassen zusätzlich zum Modul-Kondensator jeweils vier Serienschaltungen von je zwei Schaltelementen, wobei diese Serienschaltungen parallel zum Modul-Kondensator liegen. Jede dieser Serienschaltungen enthält somit einen Verbindungspunkt zwischen zwei aufeinanderfolgenden Schaltern. Diese bilden die vier Anschlüsse des Moduls, wobei jeweils einer dieser vier Anschlüsse direkt mit einem Anschluss eines benachbarten Moduls verbunden ist und jeweils einer dieser vier Anschlüsse über einen Anschluss der Induktivität mit dem Anschluss eines benachbarten Moduls verbunden ist. Weiterhin kann sich auch noch ein weiteres Schaltelement innerhalb des Zwischenmoduls parallel zur Induktivität befinden und im eingeschalteten Zustand diese überbrücken.

Alternativ kann der Ladungs- bzw. Spannungsausgleich zwischen den Kondensatoren der Module vor dem Parallelschalten aber auch auf eine andere Weise erfolgen, so dass keine Zwischenmodule erforderlich sind. Allerdings müssen die entsprechenden Module gegenüber den in der bislang noch nicht veröffentlichten Anmeldung DE 10 2010 052 934.6 beschriebenen Modulen modifiziert werden und die Ansteuerung der Schaltelemente verändert werden, wie im folgenden beschrieben wird:

Der Parallelschalt-Vorgang wird eingeleitet, indem zunächst einer der beiden Betriebszustände a) oder b) des elektronischen Umrichters ermittelt wird:

a) Laden der Kondensatoren der Module mit einem positiven Ladestrom; d.h. die Kondensatorspannung der beteiligten Modul-Kondensatoren steigt.

b) Entladen der Kondensatoren der Module mit einem negativen Ladestrom; d.h. Kondensatorspannung der beteiligten Modul-Kondensatoren sinkt.

Anschließend wird aus der Gruppe der parallel zu schaltenden Modul-Kondensatoren in Abhängigkeit von ihrer Spannung eine Reihenfolge zugeordnet Im Fall a) wird derjenige Kondensator mit der niedrigsten Spannung ausgewählt und über eine entsprechende Verschaltung der Schaltelemente der Module so geschaltet, dass er aufgeladen wird, d.h. seine Kondensatorspannung steigt. Wenn die Ladespannung dieses Kondensators den Wert des Kondensators mit der zweitniedrigsten Spannung erreicht, wird dieser zweite Kondensator parallel mit dem ersten Kondensator verbunden und weitergeladen. Dieser Vorgang wird entsprechend weitergeführt, bis auch der Kondensator mit der höchsten Spannung zu dem Gesamtsystem parallel geschaltet werden kann.

Im Fall b) wird derjenige Kondensator mit der höchsten Spannung ausgewählt und über eine entsprechende Verschaltung der Halbleiterschalter der Module so geschaltet, dass er entladen wird. Wenn die Ladespannung dieses Kondensators den Wert des Kondensators mit der zweithöchsten Spannung erreicht, wird dieser zweite Kondensator parallel mit dem ersten Kondensator verbunden und weiter entladen. Dieser Vorgang wird entsprechend weitergeführt, bis auch der Kondensator mit der niedrigsten Spannung zu dem Gesamtsystem parallel geschaltet werden kann.

Die Ladeströme durch die die Kondensatoren hierbei geladen oder entladen werden, sind dabei üblicherweise direkt die Ströme mit denen der Umrichter betrieben wird. Daher sind diese Ströme üblicherweise relativ groß, so dass die Spannungsänderungen an den betreffenden Kondensatoren auch sehr schnell erfolgen. Entsprechend erfolgt auch der oben beschriebene Ladungsausgleich sehr schnell und kann leicht zwischen zwei Schaltzyklen des Umrichters durchgeführt werden. Wenn andererseits der Umrichterstrom aktuell sehr klein ist, kann - wegen der geringen Umrichterverluste - auch auf die entsprechende Parallelschaltung von Modul-Kondensatoren verzichtet werden.

Bei dieser Ausführungsform des Umrichters muss beachtet werden, dass bei der Sortierung der Modul-Kondensatoren in eine Reihenfolge der Spannung nicht zwangsläufig ein Modul-Kondensator mit der nächsthöheren (bzw. nächstniedrigeren) Spannung unmittelbar benachbart positioniert ist. Daher ist es notwendig, dass die Module hinsichtlich ihrer Schaltelemente so ausgeführt sind, dass ein Parallelschalten von Modul-Kondensatoren auch möglich ist, wenn deren Module nicht unmittelbar benachbart sind; d.h. wenn eines oder mehrere Module dazwischen liegen. Die Modul-Kondensatoren dieser dazwischenliegenden Module sollen dabei zunächst noch nicht in den Ladeprozess integriert werden. Hierzu genügt es, wenn ein Anschluss eines solchen Modul-Kondensators über ein entsprechendes Schaltelement frei geschaltet ist, also nicht mit dem entsprechenden Stromkreis verbunden ist. Gleichzeitig müssen aber die Schaltelemente dieses übersprungenen Moduls gewährleisten, dass der Stromfluss zwischen den Modulen deren Kondensatoren parallel geschaltet werden sollen, gewährleistet ist.

Für einen derartigen Umrichter kann vorzugsweise weiterhin eine Messschaltung eingesetzt werden, welche die Spannungswerte der einzelnen Kondensatoren misst.

Außerdem kann für einen solchen Umrichter vorzugsweise weiterhin eine Steuerschaltung eingesetzt werden, welche einerseits die gemessenen Spannungen der Modul-Kondensatoren in eine den Modulen zugeordnete Reihenfolge bringen kann und andererseits die Module so ansteuert, dass die oben beschriebene zeitliche Abfolge der Parallelschaltung realisiert werden kann.

Daher wird im Rahmen der vorliegenden Erfindung eine weitere Ausführungsform des elektrischen Umrichtersystem bestehend aus mindestens drei gleichartigen hintereinander geschalteten Modulen bereitgestellt. Jedes Modul weist dabei mindestens 4 Anschlüsse auf, um über jeweils mindestens zwei Anschlüsse mit seinem rechten und linken Nachbarmodul verbunden werden zu können. Weiterhin weist jedes Modul mindestens einen Modul-Kondensator zur Energiespeicherung und Schaltelemente auf. Über diese Schaltelemente können die beiden Anschlüsse des Modul-Kondensators elektrisch mit den jeweiligen Anschlüssen des Moduls verbunden werden. Auf diese Weise können die Modul-Kondensatoren der Module über die Schaltelemente wahlweise in Serie als auch parallel geschaltet werden. Insbesondere können einzelne Modul-Kondensatoren des Umrichters in Serie und gleichzeitig weitere Modul-Kondensatoren parallel geschaltet werden, so dass die gebildete Serienschaltung in Serie zu der ebenfalls gebildeten Parallelschaltung liegt. Weiterhin können durch entsprechende Einstellung der Schaltelemente auch einzelne Modul-Kondensatoren aus der Verschaltung ausgenommen werden, so dass die entsprechenden Module zwar ihr linkes benachbartes Modul elektrisch mit dem rechten benachbarten Modul verbinden, ihr eigener Modul-Kondensator dabei aber weder geladen noch entladen wird. In diesem Fall erfolgt also eine direkte elektrische Verbindung eines Moduls zu einem nicht unmittelbar benachbarten Modul unter Überspringen der dazwischenliegenden Module, wobei die direkte elektrische Verbindung mindestens zweipolig sein muss, wenn eine Parallelschaltung von Modul-Kondensatoren unter Überspringen dazwischenliegender Module vorgenommen werden soll.

Dadurch, dass einzelne Modul-Kondensatoren aus der Verschaltung ausgenommen werden können, kann vor einer gewünschten Parallelschaltung zweier oder mehrerer Modul-Kondensatoren ein Angleichen der Kondensatorspannung nach der nachfolgend beschriebenen Lade- oder Entladestrategie vorgenommen werden. Diese Ladestrategie erfolgt direkt unter der äußeren Strombelastung des Umrichters (d.h. der Hintereinanderschaltung der Module), so dass je nach Stromrichtung des Laststroms durch den Umrichter ein erster Modul-Kondensator dieser geplanten Parallelschaltung zunächst aufgeladen oder entladen wird.

Die Auswahl dieses ersten Modul-Kondensators erfolgt je nachdem, ob der Laststrom den Kondensator auflädt, als den Modul-Kondensator mit der niedrigsten Spannung oder wenn der Laststrom den Kondensator entlädt, als den Modul-Kondensator mit der höchsten Spannung.

Anschließend wird ein parallelzuschaltender Modul-Kondensator ausgewählt, wobei hierfür entweder der Kondensator mit der zweitniedrigsten Spannung gewählt wird, wenn der Laststrom den ersten Modul-Kondensator auflädt. Bzw. es wird der Kondensator mit der zweithöchsten Spannung gewählt, wenn der Laststrom durch den Umrichter den ersten Modul-Kondensator entlädt.

Dieser parallelzuschaltende Modul-Kondensator wird aber erst dann mit dem ersten Modul-Kondensator parallel geschaltet, wenn der Laststrom den ersten Modul-Kondensator so weit aufgeladen bzw. entladen hat, dass er die gleiche Spannung wie der ausgewählte parallelzuschaltende Modul-Kondensator hat. Auf diese Weise werden beim Parallelschalten der Kondensatoren über die Schaltelemente Umladeverluste vermieden.

Wiederholung der vorigen beiden Schritte, bis alle Modul-Kondensatoren deren Parallelschaltung erfolgen soll, miteinander parallel geschaltet sind.

Dieses beschriebene Angleichen der Spannung vor dem Parallelschalten kann sehr schnell geschehen, da übliche Lastströme durch den Umrichter relativ groß zu den Lade- oder Entladezeiten der entsprechenden Modul-Kondensatoren sind. Insbesondere ist die Parallelschaltung von Kondensatoren insbesondere dann gewünscht, wenn der Umrichter mit sehr hohen Lastströmen beaufschlagt wird. Daher kann das Angleichen der Spannungen leicht zwischen zwei Schaltzyklen des Umrichters erfolgen.

In einer bevorzugten Ausführungsform der vorliegenden Erfindung bestehen die Module des Umrichtersystems aus einem Modul-Kondensator und jeweils zwei parallel zum Modul-Kondensator liegenden Serienschaltungen von je zwei Schaltelementen. Jede dieser beiden Serienschaltungen enthält somit einen Verbindungspunkt zwischen zwei aufeinanderfolgenden Schaltern einer Serienschaltung. Diese zwei Verbindungspunkte bilden die zwei Anschlüsse des Moduls zum ersten benachbarten Modul. Weiterhin werden zwei weitere Anschlüsse des Moduls zum zweiten benachbarten Modul gebildet über je ein weiteres Schaltelement zum oberen bzw. zum unteren Anschluss des Modul-Kondensators. Zusätzlich verbindet noch ein weiteres Schaltelement den einen Anschluss zum ersten benachbarten Modul mit einem anderen Anschluss zum zweiten benachbarten Modul, so dass über dieses Schaltelement zwischen diesen beiden Anschlüssen eine direkte elektrische Verbindung geschaltet werden kann.

In einer weiteren bevorzugten Ausführungsform der vorliegenden Erfindung bestehen die Module des Umrichtersystems aus einem Modul-Kondensator und jeweils zwei parallel zum Modul-Kondensator liegende Serienschaltungen von je zwei Schaltelementen. Jede dieser beiden Serienschaltungen enthält somit einen Verbindungspunkt zwischen zwei aufeinanderfolgenden Schaltern. Die Anschlüsse zum ersten benachbarten Modul sind direkt mit diesen Verbindungspunkten dieser Serienschaltungen verbunden. Weiterhin sind die Anschlüsse zum zweiten benachbarten Modul einmal direkt und einmal über ein weiteres Schaltelement mit diesen Mittelpunkten der Serienschaltungen verbunden. Auf diese Weise ergibt sich eine Serienschaltung von gleichartigen Modulen, wobei immer jedes nachfolgende Modul relativ zu seinem vorhergehenden Modul der horizontal dargestellten Hintereinanderschaltung an einer horizontalen Achse gespiegelt ist. Mit anderen Worten enthalten die Anschlüsse zum zweiten benachbarten Modul abwechselnd oben oder unten ihr weiteres Schaltelement, während der jeweils andere Anschluss zum zweiten benachbarten Modul direkt verbunden ist.

Im Rahmen der vorliegenden Erfindung wird auch ein Verfahren zum Ansteuern eines Umrichters für Stromversorgungen bereitgestellt. Der Umrichter besteht dabei aus gleichartigen hintereinander geschalteten Modulen und zwischen den Modulen liegenden gleichartigen Zwischenmodulen. Jedes Modul weist mehrere Schaltelemente und mindestens 4 Anschlüsse auf und enthält mindestens einen Modul-Kondensator zur Energiespeicherung. Weiterhin enthält jedes Zwischenmodul mindestens eine Induktivität zur Energiespeicherung und weist mindestens zwei Anschlüsse auf. Das Verfahren umfasst die folgenden Schritte:

- Auswählen einer Einstellung der Schaltelemente eines Moduls, dass wahlweise entweder eine direkte elektrische Verbindung über mindestens einen seiner Anschlüsse eines ersten zu dem Modul benachbarten Moduls zu einem zweiten zu dem Modul benachbarten Modul erfolgt, oder dass der Modul-Kondensator des Moduls über einen Anschluss zu einem Modul-Kondensator eines benachbarten Moduls in Serie geschaltet wird oder dass der Modul-Kondensator des Moduls über zwei Anschlüsse zu einem Modul-Kondensator eines benachbarten Moduls in parallel geschaltet wird; und

- Steuern der Schaltelemente so, dass ein Energie- und Ladungstransport zwischen den Modul-Kondensatoren über die Induktivitäten der Zwischenmodule nach dem Prinzip eines Schaltwandlers erfolgen kann, so dass Spannungen von Modul-Kondensatoren die parallel geschaltet werden sollen vor dem Parallelschalten auf einen gleichen Wert gebracht werden.

Im Rahmen der vorliegenden Erfindung wird auch eine weitere Ausführungsform eines Verfahrens zum Ansteuern eines Umrichters für Stromversorgungen bereitgestellt. Der Umrichter besteht dabei aus gleichartigen hintereinander geschalteten Modulen. Jedes Modul weist mehrere Schaltelemente und mindestens 4 Anschlüsse auf und enthält mindestens einen Modul-Kondensator zur Energiespeicherung. Das Verfahren umfasst die folgenden Schritte:

- Auswählen einer Einstellung der Schaltelemente eines Moduls, dass wahlweise entweder eine direkte elektrische Verbindung über mindestens einen seiner Anschlüsse eines ersten zu dem Modul benachbarten Moduls zu einem zweiten zu dem Modul benachbarten Modul erfolgt, oder dass der Modul-Kondensator des Moduls über einen Anschluss zu einem Modul-Kondensator eines benachbarten Moduls in Serie geschaltet wird oder dass der Modul-Kondensator des Moduls über zwei Anschlüsse zu einem Modul-Kondensator eines benachbarten Moduls in parallel geschaltet wird, wobei das Parallelschalten von Modul-Kondensatoren von Modulen, deren Parallelschaltung erfolgen soll, beginnend mit einem ersten Modul-Kondensator der Reihe nach im laufenden Betrieb des Umrichters zugeschaltet werden, wobei dieses Ansteuern der Module die folgenden Teilschritte umfasst:

  - Auswahl des Modul-Kondensators unter den Modul-Kondensatoren der geplanten Parallelschaltung mit der niedrigsten Spannung als ersten Modul-Kondensator, wenn ein Laststrom durch den Umrichter diesen Modul-Kondensator auflädt, bzw. Auswahl des Modul-Kondensators mit der höchsten Spannung als ersten Modul-Kondensator, wenn ein Laststrom durch den Umrichter diesen Modul-Kondensator entlädt;

  - Auswahl eines parallelzuschaltenden Modul-Kondensators mit der zweitniedrigsten Spannung, wenn ein Laststrom durch den Umrichter den ersten Modul-Kondensator auflädt, bzw. Auswahl eines parallelzuschaltenden Modul-Kondensators mit der zweihöchsten Spannung, wenn ein Laststrom durch den Umrichter den ersten Modul-Kondensator entlädt;

  - Parallelschalten dieses ausgewählten parallelzuschaltenden Modul-Kondensators zum ersten Modul-Kondensator, wenn der Laststrom durch den Umrichter den ersten Modul-Kondensator so weit aufgeladen bzw. entladen hat, dass er die gleiche Spannung wie der ausgewählte parallelzuschaltende Modul-Kondensator hat; und

  - Wiederholung der vorigen beiden Schritte, bis alle Modul-Kondensatoren deren Parallelschaltung erfolgen soll miteinander parallel geschaltet sind.

Die Erfindung bietet folgende Vorteile:

- Der Ladungsausgleich zwischen Ladungen von Modul-Kondensatoren kann beliebig verlustarm erfolgen.

- Die Auslegung der elektronischen Bauelemente eines Moduls muss lediglich auf die Modulspannung festgelegt werden, so dass über eine Vielzahl von Einzelmodulen Umrichter mit sehr großen Spannungsfestigkeiten aufgebaut werden können.

- Die Spannungs-Symmetrierung der Module erfolgt direkt über die entsprechende Ansteuerung der Schaltelemente. Zusätzliche Symmetrierungen sind hier nicht erforderlich.

- Die Schaltungstopologie der Einzelmodule gewährt durch die Energiespeicherelemente einen Überspannungsschutz gegenüber den Ein-/Ausgängen (Tiefpasswirkung).

- Ausfallsicherheit durch Ausnutzung der Redundanzen in der Steuerung.

- Die Option mit dem erfindungsgemäßen Aufbau die Energiespeicherelemente wahlweise in Serie oder parallel zu schalten erlaubt den Bau von Umrichtern mit großem Spannungsverhältnis (und entsprechendem Stromverhältnis) zwischen Ein- und Ausgangsklemmen. Ein solches System hat deutlich geringere Verluste als bisherige Umrichter, da jeweils bei der kleineren Spannung ein Anzahl von Modulen parallel geschaltet wird. Insbesondere werden die Ohmschen Verluste der Energiespeicher, aber auch der Schaltelemente reduziert.

- Durch den Wegfall von Verlusten beim Umschalten der Modul-Kondensatoren von Reihen- auf Parallelschaltung kann der Umrichter auch als Transformatorersatz zur effektiven Wandlung von Gleich- und Wechselspannung sowohl zur Erhöhung einer Eingangsspannung, wie auch zur Senkung einer Eingangsspannung verwendet werden. Auf diese Weise lassen sich - bei entsprechend schneller Taktung des Umrichters - sehr kleine Wandler mit sehr hoher Leistungsdichte bauen.

• Da bei entsprechender Konfiguration der Module ein Ladungsausgleich auch zu Modulen benachbarter Brückenzweige hin erfolgen kann, sind bei Verwendung der erfindungsgemäßen Module und Zwischenmodule auch völlig neue Topologien für mehrphasige Stromrichter möglich, da die bisherige Funktion einer gemeinsamen Gleichspannungsschiene mit einer definierten Zwischenkreisspannung nicht mehr erforderlich ist.

• Durch die Verwendung der Zwischenmodule können die Spannungen einzelner Modul-Kondensatoren anstelle eines Spannungsausgleichs auch nach individuellen Erfordernissen angepasst werden, so dass ein entsprechender Umrichter bestimmte Spannungen direkt ohne weitere PWM erzeugen kann. Insbesondere können Modul-Kondensatoren auch so umgeladen werden, dass aus einem Modul-Kondensator mit wenig Ladung weitere Ladung entnommen wird, um einen anderen Modul-Kondensator weiter aufzuladen.

KURZBESCHREIBUNG DER ZEICHNUNGEN

Im folgenden wird die vorliegende Erfindung anhand bevorzugter erfindungsgemäßer Ausführungsformen mit Bezug zu den Figuren im Detail beschrieben, wobei:

Fig. 1    einen Brückenzweig eines modularen Multilevelkonverters nach dem Stand der Technik, bestehend aus drei gleichen Zweipolen beschreibt;

Fig. 2    den möglichen Aufbau eines einzelnen Moduls eines modularen Multilevelkonverters nach dem Stand der Technik zeigt;

Fig. 3    ein Phasenmodul eines modularen Multilevelkonverters nach dem Stand der Technik zeigt, welches aus zwei Brückenzweigen mit je drei gleichen Zweipolen aufgebaut ist;

Fig. 4    ein System zur Umwandlung einer 1-phasigen Wechselspannung (bzw. einer Gleichspannung) in eine andere 1-phasigen Wechselspannung (bzw. Gleichspannung) zeigt, welches aus zwei zusammengeschalteten Phasenmodulen eines modularen Multilevelkonverters nach dem Stand der Technik besteht;

Fig. 5    ein System zur Umwandlung einer 3-phasigen Wechselspannung in eine 1-phasige Wechselspannung bzw. eine Gleichspannung zeigt, welches aus drei zusammengeschalteten Phasenmodulen eines modularen Multilevelkonverters nach dem Stand der Technik besteht;

Fig. 6    ein System zur Kopplung eines 3-phasigen Drehstromnetzes mit einem zweiphasigen Netz zeigt, welches aus drei und zwei zusammengeschalteten Phasenmodulen eines modularen Multilevelkonverters nach dem Stand der Technik besteht;

Fig. 7    eine Modulstruktur bestehend aus erfindungsgemäßen Modulen und Zwischenmodulen zeigt;

Fig. 8    einen getakteten Abwärtswandler zeigt;

Fig. 9    einen getakteten Wandler zeigt, der sowohl als Aufwärtswandler, wie auch als Abwärtswandler verwendet werden kann;

Fig. 10    eine erste bevorzugte Ausführungsform eines Moduls zeigt, wie es in dem erfindungsgemäßen Umrichter mit zusätzlichen Zwischenmodulen verwendet werden kann;

Fig. 11    eine zweite bevorzugte Ausführungsform eines Moduls zeigt, wie es in dem erfindungsgemäßen Umrichter mit zusätzlichen Zwischenmodulen verwendet werden kann;

Fig. 12    die Verbindung zweier Module über eine Induktivität als Zwischenmodul zeigt, wobei die Module der ersten Ausführungsform entsprechen und Schutzdioden parallel zu den Schaltern enthalten;

Fig. 13    die Verbindung zweier Module über eine Induktivität als Zwischenmodul zeigt, wobei die Module der zweiten Ausführungsform entsprechen und MOSFETS als Schalter enthalten;

Fig. 14     die Verbindung zweier Module über eine Induktivität mit Bypassschalter als Zwischenmodul zeigt, wobei die Module der ersten Ausführungsform entsprechen;

Fig. 15     die Verbindung zweier Module über eine Induktivität mit Bypassschalter als Zwischenmodul zeigt, wobei die Module der zweiten Ausführungsform entsprechen;

Fig. 16     verschiedene Modifikationsformen eines Buck-Boost-Converters zeigen;

Fig. 17     die Verbindung zweier Module über eine Induktivität nach dem Konzept eines Buck-Boost-Converters als Zwischenmodul zeigt, wobei die Module der ersten Ausführungsform entsprechen;

Fig. 18     die Verbindung zweier Module über eine Induktivität nach dem Konzept eines Buck-Boost-Converters als Zwischenmodul zeigt, wobei die Module der zweiten Ausführungsform entsprechen;

Fig. 19     eine Modulstruktur bestehend aus erfindungsgemäßen Modulen und Zwischenmodulen und den Ausgleich von Ladungen zwischen den Modulen zeigt;

Fig. 20     eine Modulstruktur abgeleitet von der ersten Ausführungsform mit jeweils drei Abgriffen zum Nachbarmodul, Schutzdioden parallel zu den Schaltern und einer Induktivität zwischen den Verbindungsleitungen als Zwischenmodul zeigt;

Fig. 21     eine Modulstruktur abgeleitet von der zweiten Ausführungsform mit jeweils drei Abgriffen zum Nachbarmodul und einer Induktivität innerhalb einer Verbindungsleitung als Zwischenmodul zeigt;

Fig. 22     eine Modulstruktur abgeleitet von der zweiten Ausführungsform mit jeweils drei Abgriffen zum Nachbarmodul, MOSFETs als Schalter und einer Induktivität zwischen zwei Verbindungsleitungen als Zwischenmodul zeigt;

Fig. 23     eine Modulstruktur abgeleitet von der zweiten Ausführungsform mit jeweils drei Abgriffen zum Nachbarmodul, MOSFETs als Schalter und einer Induktivität innerhalb einer Verbindungsleitung als Zwischenmodul zeigt;

Fig. 24     eine Modulstruktur bestehend aus erfindungsgemäßen Modulen zeigt, welche so ausgeführt sind, dass sie einen Ladungsausgleich ohne Zwischenmodule durchführen können;

Fig. 25     eine erste Ausführungsform von erfindungsgemäßen Modulen zeigt, welche einen Ladungsausgleich ohne Zwischenmodule durchführen können;

Fig. 26     eine zweite Ausführungsform von erfindungsgemäßen Modulen zeigt, welche einen Ladungsausgleich ohne Zwischenmodule durchführen können.

In den Zeichnungen sollen gleiche Bezugszeichen gleiche Teile, Bauteile und Anordnungen bezeichnen.

DETAILLIERTE BESCHREIBUNG BEVORZUGTER AUSFÜHRUNGSFORMEN

Die Erfindung basiert auf der Erkenntnis, dass ein Stromrichter, der aus einer Hintereinanderschaltung von mehreren gleichartigen Modulen aufgebaut und bei dem die Kondensatoren der Module wahlweise parallel oder seriell geschaltet werden können, so auszuführen ist, dass die Spannungen der Kondensatoren vor dem Parallelschalten einander angeglichen werden sollten.

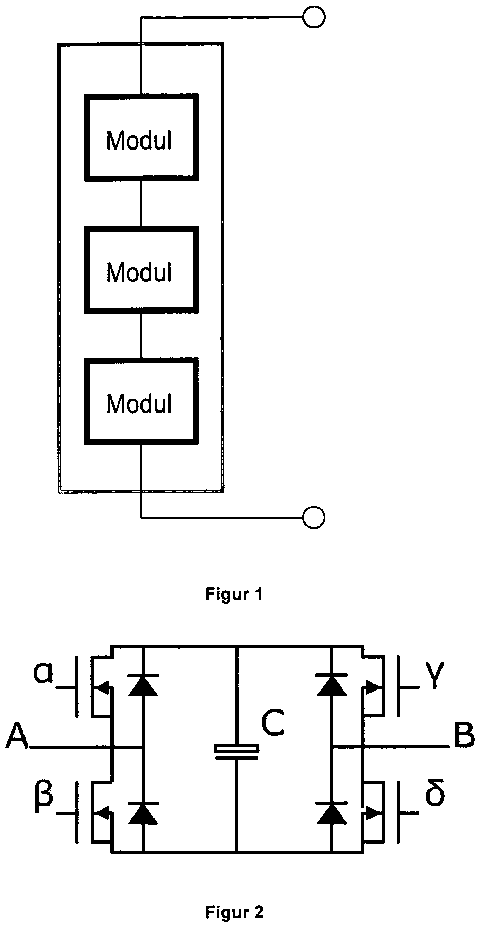

Figur 1 zeigt einen Brückenzweig eines modularen Multilevelkonverters wie er in DE 102 17 889 A1 genauer beschrieben ist, bestehend aus mehreren gleichartigen in Serie geschalteten Zweipolen. Dargestellt sind hier drei in Serie geschaltete Zweipole; es können jedoch auch zwei oder aber beliebig viele solcher Zweipole in Serie geschaltet werden. Jedes Einzelmodul fungiert als ein Zweipol und enthält ein Energiespeicherelement in Form eines Kondensators, sowie mehrere Schaltelemente, die für beide Spannungsrichtungen wahlweise Strom aufnehmen oder abgeben können und damit alle vier Quadranten des Strom-Spannungs-Graphen erreichen.

Figur 2 zeigt den möglichen inneren Aufbau eines solchen Zweipol-Elements mit vier Halbleiterschaltern, zusätzlichen Schutzdioden und einem Energiespeicher-Kondensator.

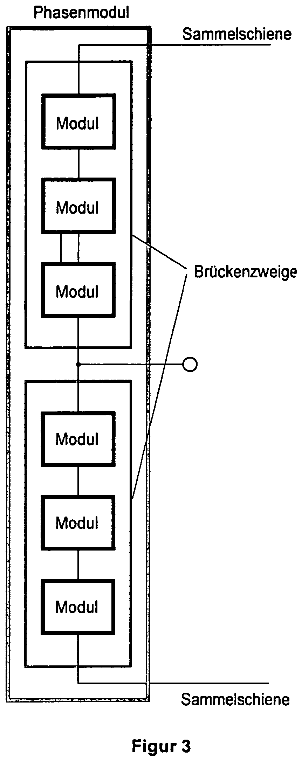

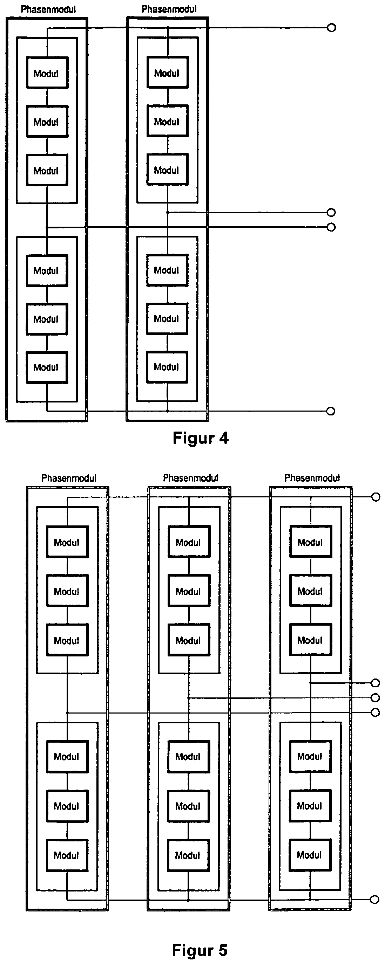

Figur 3 zeigt ein Phasenmodul eines modularen Multilevelkonverters, welches aus zwei in Serie geschalteten Brückenzweigen nach Figur 1 aufgebaut ist. Über die obere und untere Sammelschiene können mehrere Phasenmodule miteinander verbunden sein, während der mittlere Anschluss mit einer Phase eines ein- oder mehrphasigen Wechselstromnetzes verbunden ist. Entsprechend zeigen die Figuren 4 und 5 die Zusammenschaltung von zwei bzw. drei Phasenmodulen. Mit zwei Phasenmodulen kann eine 1-phasige Wechselspannung bzw. eine Gleichspannung in eine andere 1-phasige Wechselspannung bzw. eine Gleichspannung umgewandelt werden. Die Zusammenschaltung von drei Phasenmodulen gemäß Figur 5 ergibt ein System zur Umwandlung einer 3-phasigen Wechselspannung in eine 1-phasige Wechselspannung bzw. eine Gleichspannung.

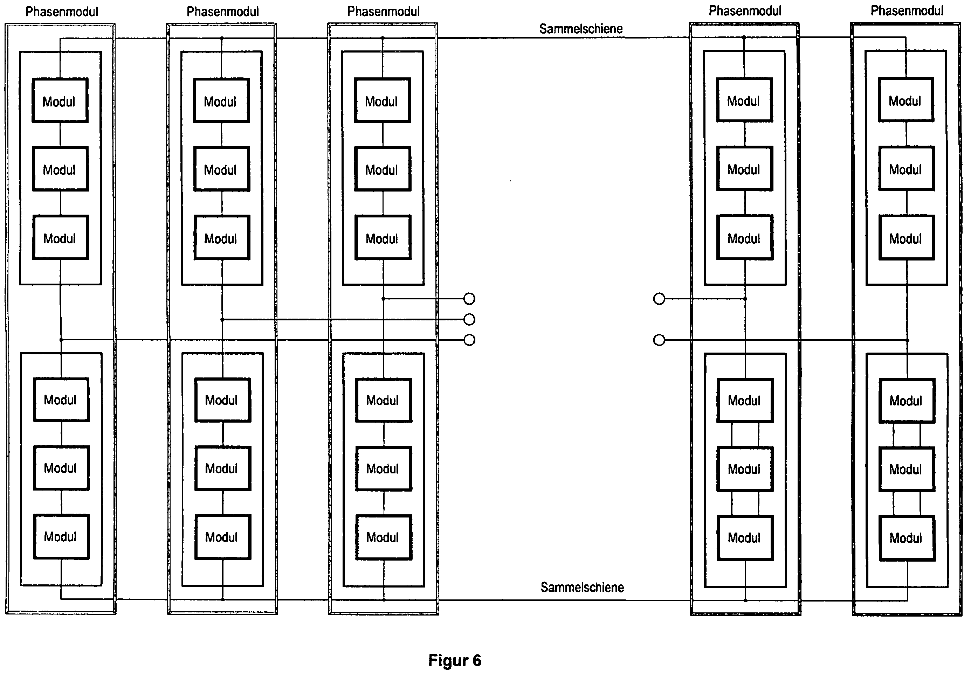

Weiterhin ist in Figur 6 beispielhaft die Kopplung eines dreiphasigen Drehstromnetzes mit einem zweiphasigen Netz dargestellt. Der Energiefluss dieser beiden Netze findet dabei wieder über die zwei Leitungen der Sammelschiene statt.

Bei Verwendung von Modulen, welche für den Vierquadranten-Betrieb ausgelegt sind, ist der Aufbau solcher Systeme vollkommen symmetrisch bezüglich der Ein- bzw. Ausgänge und ermöglicht somit gegenüber jedem Anschlusspaar einen vollständigen Vierquadrantenbetrieb.

Die hier beschriebene Erfindung will den für eine Parallelschaltung erforderlichen Ladungsausgleich der Kondensatoren nicht nur verbessern, sondern in diesem Zug auch eine neue Funktionalität einführen. Hierfür kann ein Umsetzerblock als zusätzliche Komponente eingeführt werden. Durch das Ergänzen von (hierfür verallgemeinerten) Speichermodulen mit kleinen Niederspannungszwischenwandlermodulen kann eine nahezu verlustfreie Ladungsverschiebung über eine gesamte Kette hinweg mit integrierter Spannungswandlung erreicht werden. Folglich können sogar noch leerere Module nach dem Prinzip des Hochsetzstellers vollere laden oder schlicht eine Welle über den Strang hinweg initiieren, aus der sich Module bei Bedarf speisen können oder die sie schlicht passieren lassen, bis sie das letzte Modul beispielsweise aktiv zurückreflektiert.

Im folgenden wird das Prinzip des Ladungsausgleichs über Zwischenmodule zunächst unter Bezug auf bestimmte Wandler beschrieben und dergestalt weiterentwickelt, dass für diese Ausgleichsfunktion möglichst wenige Bauelemente erforderlich sind.

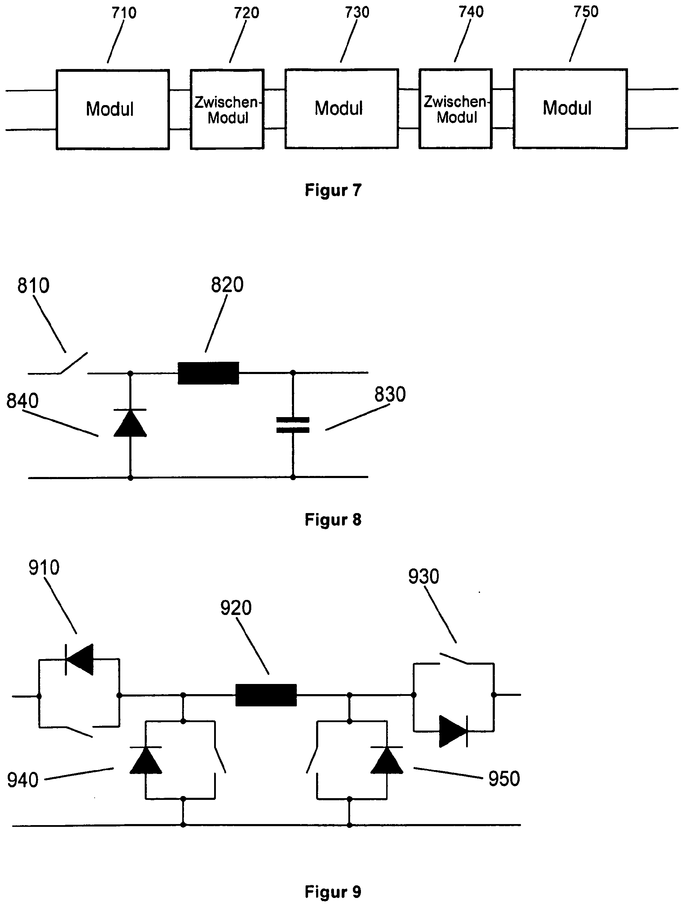

In Figur 7 ist daher schematisch eine erfindungsgemäße Modulstruktur gezeigt, bei der zwischen den Modulen 710, 730, 750 des Umrichters jeweils ein Zwischenmodul 720, 740 eingefügt ist. Hierfür sind jeweils mindestens zwei elektrische Verbindungen von einem Modul zum nächsten erforderlich, wobei davon mindestens eine Verbindung über das Zwischenmodul läuft und optional eine oder mehrere direkte Verbindungen zwischen den Modulen bestehen. Definitionsgemäß speichern die Module Energie über jeweils mindestens einen Modul-Kondensator, während die Zwischenmodule mindestens einen Energiespeicher in Form einer Induktivität aufweisen. Da ein Energietransfer zwischen den Modulen über die Induktivitäten getaktet, also in Portionen stattfindet, darf der Energieinhalt der Induktivitäten durchaus deutlich kleiner sein, als der der Modul-Kondensatoren.

Im einfachsten Fall werden einfach zur erfindungsgemäßen Realisierung eines solchen Umrichters bestehende Module eines modularen Multilevelkonverters, der Reihen- und Parallelschaltung der Modul-Kondensatoren erlaubt, verwendet und das wandelnde System beinhaltet einen getakteten Abwärtswandler. Eine beispielhafte Variante ist in Figur 8 dargestellt. Dieser Wandler besteht lediglich aus einem (Halbleiter-)Schalter 810, einer Induktivität 820 einem Kondensator 830 und einer Diode 840. Damit ist der Ladungsausgleich prinzipiell bereits mit (nahezu) beliebig kleinen Transferverlusten möglich. Durch die fixe Definierung der Spannungspolarität der Stromschienen durch Dioden, wie sie bei den parallelfähigen Modulen oft angewendet wird, lässt sich dieser Wandler direkt in die Stromschiene integrieren.

Allerdings ist es sinnvoll, nicht nur einen Ladungsausgleich nach dem obigen Schema durchzuführen, sondern einen Aufwärtswandler zu integrieren und zusammen mit der Abwärtsfunktionalität bidirektional zu integrieren. In Figur 9 ist beispielhaft eine solche Schaltung gezeigt, wie sie hier zum Einsatz kommen kann. Dabei kann die Induktivität 920 über zwei seriell zu den Verbindungsleitungen liegende und zwei parallel dazu liegende Schalter-Diode-Kombinationen 910, 930, 940, 950 mit einem nachfolgenden Modul verbunden werden. Der hohe Zusatzaufwand an Bauteilen soll in diesem Beispiel nur der besseren Verständlichkeit dienen; letztlich lässt sich ein Großteil aller Teile zusammenfassen, so dass nur relativ wenige Bauteile tatsächlich benötigt werden. Diese gezeigte Variante wurde aber nicht unüberlegt in dieser Form angesetzt und weist bereits so deutliche Strukturähnlichkeiten mit den Modulen auf, die sich bevorzugt nutzen lassen. In diesem Zuge wird ein Großteil der Elemente entweder verlegt oder deren Funktion auf bereits bestehende übertragen.

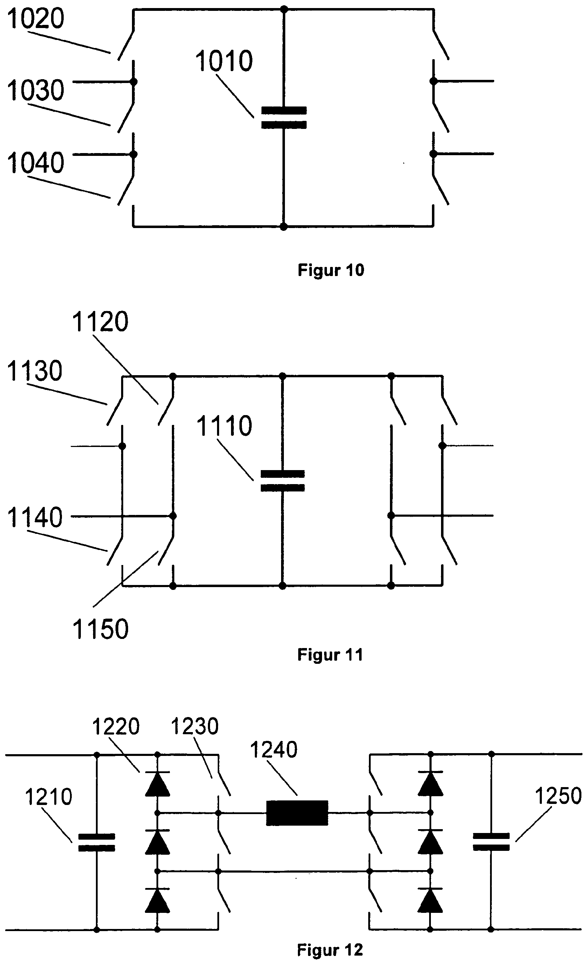

Beide Modulvarianten des modularen Multilevelkonverters mit der Möglichkeit einer Serien- und Parallelschaltung (Figur 10 und 11) lassen sich nun ebenso wie die Ursprungstopologie von R. Marquardt als Basis verwenden und entsprechend mit beiden hier vorgestellten Zwischenspannungsumsetzervarianten vereinigen. Figur 10 zeigt dabei eine Modulvariante als eine bevorzugte Ausführungsform der Erfindung, die zu beiden Seiten hin den Modul-Kondensator 1010 über jeweils 3 in Serie geschaltete Schalter 1020, 1030, 1040 und zwei Leitungen mit einem benachbarten Modul verbinden können. In Figur 11 ist eine weitere Variante als ebenfalls bevorzugte Ausführungsform der Erfindung gezeigt, bei der ebenfalls je zwei Leitungen vom Modul-Kondensator 1110 zu einem benachbarten Modul führen. Bei dieser Variante befinden sich diese Leitungen jeweils in der Mitte einer ersten Serienschaltung aus zwei Schaltern 1130, 1140 bzw. einer zweiten Serienschaltung aus zwei Schaltern 1120, 1150.

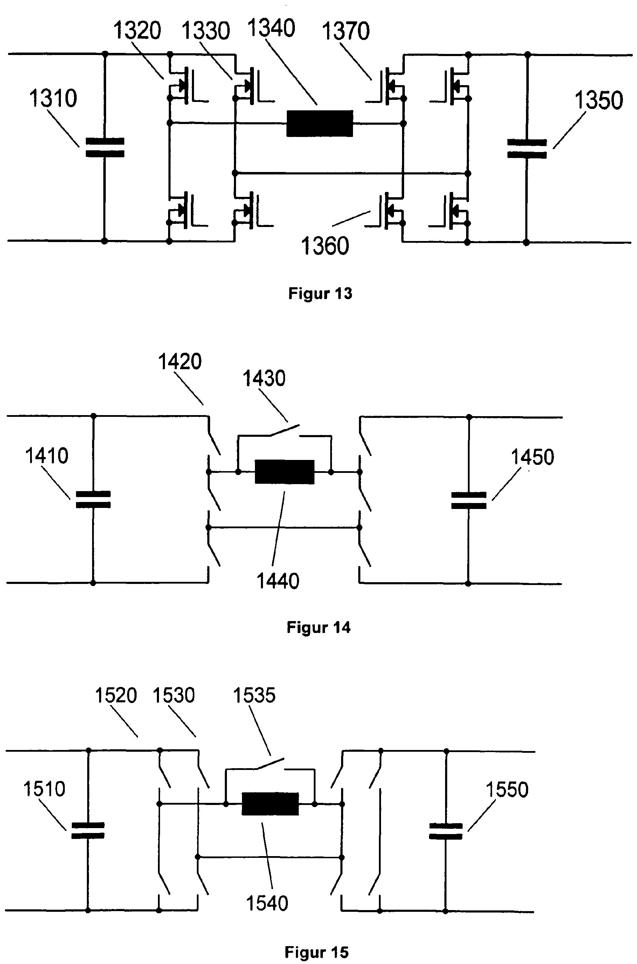

Das neue (Wandler-)Zwischenmodul lässt sich nun entweder an die Ausgänge der Module, also zwischen die Stromschienen, einbauen oder direkt an die Kondensatoranschlüsse jedes Moduls klemmen. Lediglich im Falle des Ursprungsmoduls erscheint aufgrund der einzelnen Verbindungsleitung der Anschluss jeweils an den Speicherkondensator die einzig sinnvolle Variante. Die entstehenden Schaltungen können nun vereinfacht werden, indem parallele und serielle Schaltelemente zusammengezogen werden und die reduzierte Variante beide Funktionen übernimmt. Figur 12 und 13 stellen entsprechende Varianten dar. Entsprechend zeigt Figur 12 Teile benachbarter Module gemäß Figur 10 mit einer Serienschaltung 1230 von drei Schaltern zu denen jeweils Dioden 1220 parallel geschaltet sind. Das Zwischenmodul besteht in diesem Fall lediglich aus einer Induktivität 1240. Über diese kann unter Einsatz der Schalter Energie zwischen den Modul-Kondensatoren 1210 und 1250 übertragen werden. Ferner lassen sich die Diodenfunktionen in die Halbleiter-Schalter verlegen, was den Vorzug mit sich bringt, dass - je nach Halbleiter-Schalterart - die Durchlassspannung und somit die Verluste deutlich verringert werden können.

Figur 13 zeigt eine solche Ausführungsform zweier benachbarter Module auf Basis eines Moduls nach Figur 11. Anstelle der Schalter sind hier Reihenschaltungen 1320, 1330 von je zwei n-Kanal MOSFETs gezeigt. Wie in Figur 12 besteht auch hier das Zwischenmodul nur aus einer Induktivität 1340, da die MOSFETs die entsprechenden Schaltfunktionen erfüllen um Energie zwischen den Modul-Kondensatoren 1310 und 1350 auszutauschen. Aus der anfangs getrennten Entwicklung wird nun ebenfalls die Ansteuerung dieses Systems klar. Wegen der Symmetrie der Kondensatorabgriffe ist die Lage der Induktivität auch beliebig vertauschbar und auch die anfangs benötigte Einschränkung der Spannungsrichtung zwischen den beiden Stromschienen bzw. -Abgriffen kann nun bei genauem Blick auf die Schaltung wieder aufgegeben werden.

Der Betrieb eines solchen Wandlers nach Figur 13 folgt nun ganz wie bei Aufwärts- bzw. Abwärtswandlern üblich. Eine Abwärtswandlung erfolgt einfach vom spannungsstärkeren Modul über eine getaktete Parallelverbindung zum leereren Kondensator, wobei die Induktivität den Stromanstieg begrenzt. Die Aufwärtswandlung wird durch einen Strom vom leereren Kondensator - beispielsweise 1310 - über die Induktivität zur Masse eingeleitet; das Abschalten dieses Weges in Transistor 1360, folglich auf der Zielseite, initiiert den Energietransport von der Induktivität über die Freilaufdiode des oberen Transistors 1370 in den volleren Kondensator 1350 (wobei dieses Umladen des leereren Kondensators in den volleren nur in speziellen Fällen angewendet wird).

In der oben beschriebenen Form ist das System jedoch vor allem für den klassischen Serienbetrieb und den Ladungsausgleich zwischen den Modulen optimiert. Die Parallelschaltung ist entsprechend der Induktivität immer mit einer Tiefpasscharakteristik verbunden, die jedoch fast beliebig verkleinert werden kann, wenn Ladungsausgleich und Parallelschaltung mit unterschiedlichen Taktgeschwindigkeiten betrieben werden; für eine Reduktion der Induktivität und trotzdem ausreichend schnellem Energiefluss über den Zwischenspannungsumsetzer muss dessen Taktung entsprechend erhöht werden. Die verringerte Zeitkonstante im Vergleich zum Systemtakt des Umrichters beeinflusst die Parallelschaltung damit nicht mehr. Alternativ bieten sich zwei Möglichkeiten.

Einerseits kann die Induktivität über einen schaltbaren Bypasspfad gemäß den Figuren 14 und 15 erweitert werden, so dass die Induktivität überbrückbar wird. Figur 14 zeigt Module gemäß der Struktur von Figur 10 mit Reihenschaltungen 1420 von drei Schaltern. Über der Induktivität 1440·befindet sich ein Bypassschalter 1430, so dass auch eine Verbindung zwischen den Modul-Kondensatoren 1410 und 1450 geschaltet werden kann ohne die Induktivität mit einzubeziehen.

Entsprechend zeigt Figur 15 Module gemäß der Struktur von Figur 11 mit je zwei Reihenschaltungen 1520, 1530 von je zwei Schaltern auf jeder Seite des Moduls. Wie in Figur 14 kann auch hier die Induktivität 1540 über einen Bypassschalter 1535 überbrückt werden, um eine direkte elektrische Verbindung zwischen den Modul-Kondensatoren 1510 und 1550 zu schalten. Der Mehraufwand dieser Lösungen mit jeweils einem zusätzlichen Schalter ist relativ gering, weil dieser lediglich bezüglich seines Sperrvermögens an die maximale Modulspannung auszulegen ist und die Strombelastung sehr klein ist. Dieser Halbleiter erzwingt im geschalteten Zustand lediglich einen nahezu instantanen Stromanstieg; nach kurzer Zeit übernimmt - je nach Durchlassspannung des verwendeten Schalters - die Induktivität nahezu den gesamten Ladungsfluss. Diese Topologie nutzt gezielt die enorm hohe Pulsüberlastbarkeit von Leistungshalbleitern zu ihrem Vorteil aus (in der Regel liegt rein ohmsches Belastungsverhalten vor; Kurzzeitströme beispielsweise von der zehnfachen Dauerauslegung werden allgemein bereits von den Herstellern als unproblematisch angegeben).

Gerade im Hinblick auf zukünftige Entwicklungen im Leistungselektronikbereich lässt sich ausnutzen, dass sich bei der obigen Herleitung bereits ein sehr simples Schema gezeigt hat, das zum Aufstellen einer allgemeineren Modulstruktur dient. Darin lassen sich dann alle angesprochenen - und ggf. weitere - Funktionen selbst wieder modular (und optional) einbetten. In dieser Variante steht in jedem Modul der Energiespeicher im Zentrum. Je nach oben gewählter Variante können nun eine gewisse Anzahl an Abgriffen in jede Richtung (zu den in der Regel zwei benachbarten Modulen bzw. den entsprechenden Zwischenumsetzermodulen) herausgeführt werden. Darüber hinaus sind jedoch auch Mischvarianten möglich. Im Falle der Variante nach Figur 11 gestaltet sich jeder Einzelabgriff als Gegentaktstufe mit jeweils zwei Schaltern. Bei der Ausprägung nach Figur 10 werden die Abgriffe in eine Säule integriert. Letztere Version bringt den Vorteil mit sich, weniger Halbleiterschalter zu benötigen, die Säule grenzt im Gegenzug aber die Zustände der einzelnen Abgriffe ein. Der Vorwurf des deutlich höheren Bedarfs an Halbleitern für die Variante nach Figur 11 lässt sich dagegen deutlich entkräften, da ein genauer Blick auf die Struktur zeigen wird, dass sich für jeden (der hier angesprochenen) Schaltungszustände nahezu alle Transistoren gleichzeitig nutzen lassen, so dass sich die Strombelastungen und Verluste entsprechend aufteilen. Der zentrale Unterschied zum ursprünglichen Modul eines Multilevelkonverters mit der Option einer Reihen- und Parallelschaltung der Kondensatoren ist die Zerlegung der vier Haupttransistoren in eine größere Zahl von bezüglich ihrer Strombelastbarkeit schwächeren Einzelelementen mit getrennter Ansteuerung. Mischvarianten aus Reihenschaltungen von Modulen gemäß Figur 10 und 11 sind ebenso möglich.

Nach diesem Schema lassen sich nun nahezu beliebige n-Pole zwischen zwei Konvertermodule setzen, wobei für jeden Pol des Zwischenmoduls ein entsprechender Abgriff nach obiger Beschreibung am Modul-Kondensator eines der beiden benachbarten Module erzeugt wird. In den meisten Fällen vereinfacht sich - dies wurde bereits für den hier hergeleiteten Aufwärts-/Abwärtswandler beschrieben - die Schaltung des Zwischenmoduls ebenfalls, indem Dioden oder Schaltelemente, die mit den Schaltern des Abgriffs zusammenfallen können, entfernt werden. Die direkte Verschaltung von Abgriffen eines Moduls mit jenen eines anderen sind damit selbstverständlich ebenfalls inbegriffen. Alle bisherigen modularen Multilevelkonvertermodulvarianten werden nun von diesem Prinzip eingeschlossen.

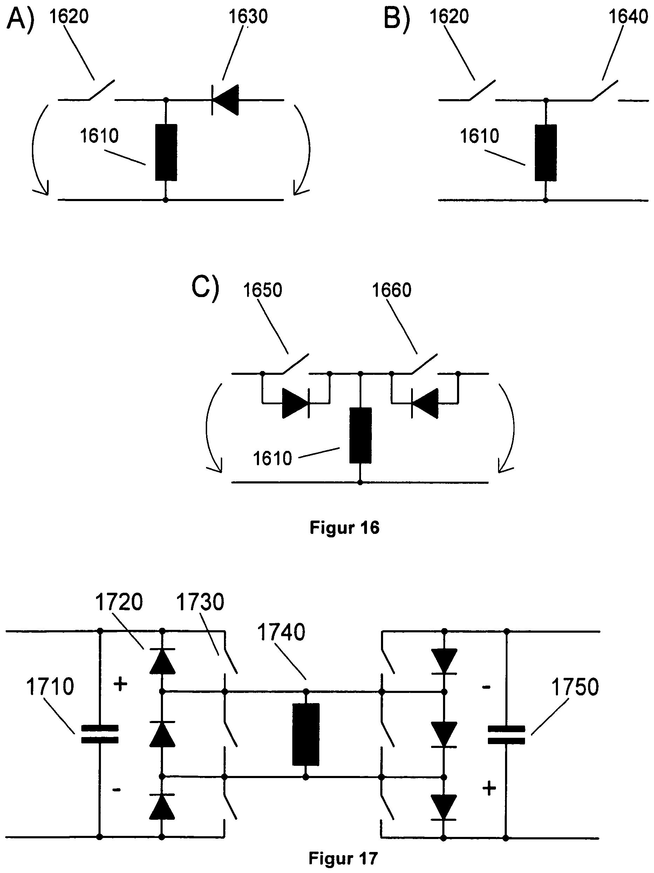

Aufbauend auf diesen Ausführungen lässt sich nun die Zusammensetzung von Modulen mit Zwischenspannungswandlern weiter ausbauen und verallgemeinern. Statt dem oben zusammengesetzten Spannungswandlerblock, der erstaunlich gut die innere Struktur der Module ausnutzen konnte, lässt sich allerdings auch das Inverswandlerprinzip nutzen. In Figur 16 ist lediglich zur Verdeutlichung das Beispiel eines äußerst einfachen Buck-Boost-Converters dargestellt. Figur 16 A) zeigt dabei die Kombination einer Induktivität 1610 mit einer Reihenschaltung von Schalter 1620 und Diode 1630. In Figur 16 B) wurde die Diode durch einen weiteren Schalter 1640 ersetzt. Diese beiden Schalter wurden in Figur 16 C) jeweils durch eine Parallelschaltung 1650, 1660 von Schalter und Diode ersetzt, um jeweils eine Rückwärts-Leitfähigkeit zu implementieren.

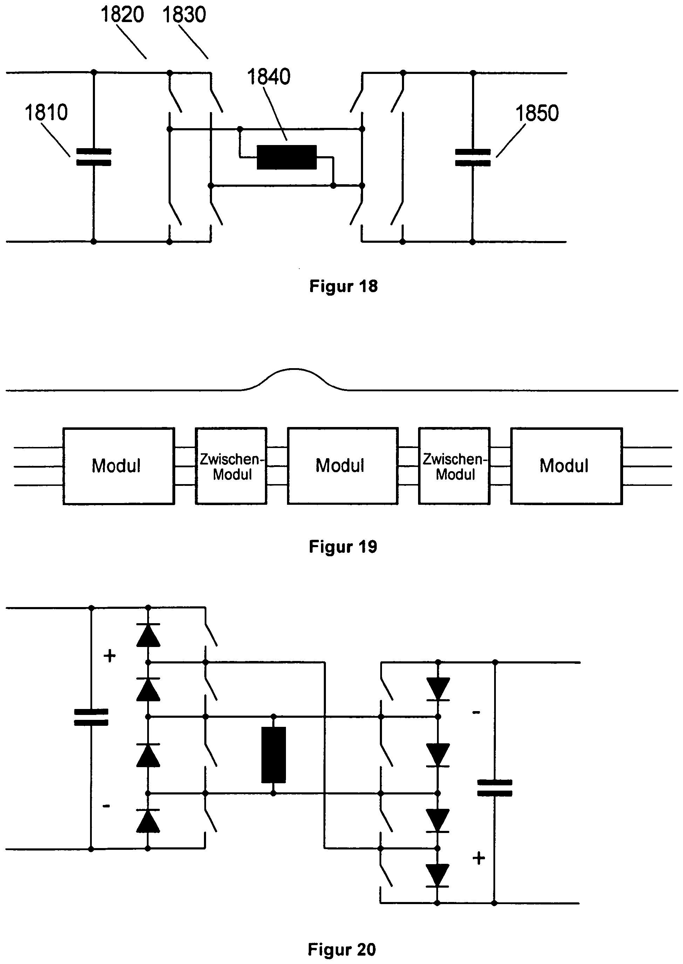

In den Figuren 17 und 18 wurde dieser Buck-Boost-Converter direkt in die Module verschaltet. Figur 17 zeigt dabei eine Variante, ähnlich wie Figur 12 mit Reihenschaltungen von jeweils drei Dioden 1720 und drei Schaltern 1730, wobei hier die Induktivität 1740 zwischen den parallel verlaufenden Verbindungsleitungen zwischen den Modulen positioniert ist. Somit kann hier eine direkte elektrische Verbindung zwischen den Modul-Kondensatoren 1710 und 1750 ohne Einbeziehen der Induktivität und ohne einen zusätzlichen Bypassschalter geschaltet werden. Das Zwischenmodul wird hierbei durch die Verbindungsleitungen, die Induktivität und vier Verbindungsanschlüsse definiert. Figur 18 zeigt eine Variante, ähnlich wie Figur 13, allerdings sind hier Reihenschaltungen 1820, 1830 von jeweils zwei Schaltern anstelle von Transistoren dargestellt. Ähnlich wie in Figur 17 befindet sich auch hier die Induktivität 1840 zwischen den parallel verlaufenden Verbindungsleitungen, die die benachbarten Module miteinander verbinden. Entsprechend kann auch hier eine direkte elektrische Verbindung zwischen den Modul-Kondensatoren 1810 und 1850 ohne Bypassschalter geschaltet werden. Wichtig ist hier jedoch, dass dieses System von Modul zu Modul die Spannung invertiert, die Kondensatoren also im Grunde von Modul zu Modul umgekehrt verbaut sind. In der Abgriff-Variante nach Figur 18 wird dies jedoch hinfällig, diese kennt auch hier keine feste Polarität. Jedoch muss dies selbstverständlich in der Steuerung berücksichtigt werden.

Beide Varianten können nun gegebenenfalls um einen weiteren Abgriff erweitert werden. Man erhält dabei Module, die einerseits beliebig verlustarm in beliebiger Richtung Energie transportieren und laden können, zudem aber auch die volle Dynamikbandbreite bei der klassischen Verschaltung (Seriell- und Parallelschaltung) abdecken können, ohne von einer der Induktivitäten gebremst zu werden. Das Schema lässt sich beliebig mit klassischen Modulen und/oder ohne Zwischenmodule fortführen.

Aus einer alternativen Perspektive betrachtet wurde in dieser Ausführungsform der vorliegenden Erfindung im Endeffekt ein zweiter Modultyp eingeführt, der im Allgemeinen ein beliebiges n-Pol-Element repräsentiert. Dies kann nahezu jedes erdenkliche elektronische System sein; im vorliegenden Fall wurde ein - im Gegensatz zum elektrischen Grundspeichermodul - magnetisches Speichermodul beispielhaft vorgestellt. Dieses konnte sogar (in Bezug auf einen Steuerungseingriff, nicht auf den Energiefluss) vollkommen passiv gestaltet werden, indem alle aktuierten Teile mit Schaltern etc. des Grundmoduls zusammengelegt oder zumindest diesem übertragen wurden.

Das Ergebnis ist als Schaltung extrem einfach, die Funktionalität wird allerdings leichter deutlich, wenn die entsprechende Herleitung aus der ausführlichen komplexeren Version betrachtet wird. Somit gibt erneut erst die Ansteuerung dem Objekt seine Funktionalität.

Zu diesem Zweck wurde ferner eine Verallgemeinerung des (elektrischen) Speichermoduls vorgenommen, die die Ausgangstopologie verlässt: Auch dieses ist nun zum m-Pol geworden. Mit dieser Veränderung sind nun eben beliebig verlustfreie Ladungsflüsse weit über den einfachen Modulausgleich hinaus möglich. Dies wird in der Option einer Ladungspumpe deutlich und kulminiert in der Möglichkeit, verlustarme Ladungswellen entlang einer Modulkette anzuregen, die jedes (elektrische) Modul auf dem Weg mit seinen Überschüssen speist oder aus deren Leistung es seine Defizite deckt. Dies ist allgemein in Figur 19 dargestellt.

Darüber hinaus sind nun auch erstmals sehr einfach stark unterschiedliche Modulkapazitäten oder gar Module verschiedener Spannungen möglich und kontrollierbar.

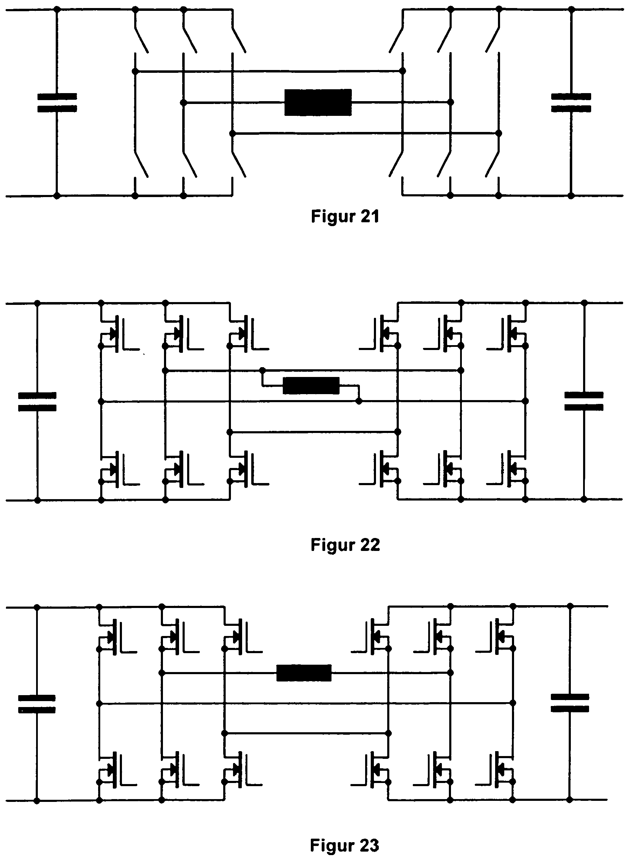

Soll die Ladungsausgleichsregelung vom eigentlichen Betrieb abgekoppelt werden, lässt sich wie in den Figuren 20 bis 23 dargestellt in beiden Varianten auch ein weiterer Kondensatorabgriff einführen, der über eine Stromschiene direkt in das Nachbarmodul geführt wird. Da hierbei wieder auf einige Schaltelemente verzichtet werden kann, ist dieser Schritt preislich nicht übermäßig teuer.

Das neue System bietet zudem die Möglichkeit, von der üblichen Vier-Säulen-Makrotopologie (Aufbau in Phasenmodulen) Abstand zu nehmen, ohne die Möglichkeit des Vierquadrantenbetriebes einzubüßen. Der Leistungstransport ist von nun ab auch über die Module hinweg möglich. Damit eröffnen sich neue Anwendungsgebiete wie beispielsweise das Batteriemanagement in elektrischen Fahrzeugen.

Alternativ kann - wie bereits oben beschrieben - ein Spannungsausgleich der Spannungen der Modul-Kondensatoren aber auch durch den Einsatz spezieller Module und einer entsprechenden Ansteuerung so vorgenommen werden, dass hierbei keine zusätzlichen Zwischenmodule erforderlich sind. Stattdessen werden die Modul-Kondensatoren in aufsteigender oder absteigender Reihenfolge geladen oder entladen. Dabei müssen die Module allerdings zusätzlich so ausgelegt sein, dass nicht nur eine wahlweise Reihen- oder Parallelschaltung vorgenommen werden kann, sondern dass auch einzelne Modul-Kondensatoren aus der Verschaltung ausgenommen werden können. Auf diese Weise können solche Module zwar beispielsweise ihr linkes benachbartes Modul elektrisch mit dem rechten benachbarten Modul in der Weise verbinden, dass deren Modul-Kondensatoren in Reihe oder parallel geschaltet sind, ihr eigener Modul-Kondensator jedoch nicht in diesen Kreis einbezogen wird. In diesem Fall erfolgt also eine direkte elektrische Verbindung eines Moduls zu einem nicht unmittelbar benachbarten Modul unter Überspringen der dazwischenliegenden Module, wobei die direkte elektrische Verbindung mindestens zweipolig sein muss, wenn eine Parallelschaltung von Modul-Kondensatoren unter Überspringen dazwischenliegender Module vorgenommen werden soll.

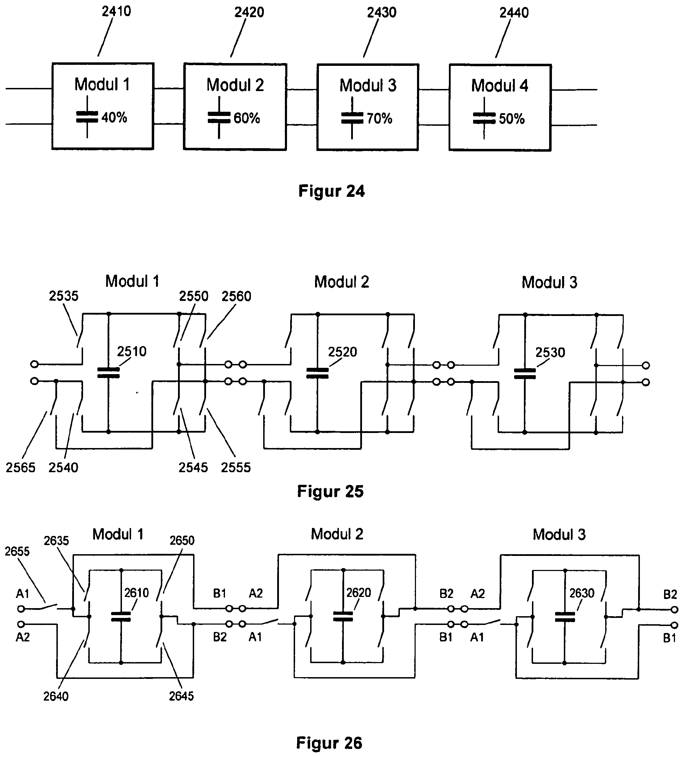

Figur 24 zeigt allgemein eine Modulstruktur bestehend aus den erfindungsgemäßen Modulen 2410, 2420, 2430 und 2440, welche so ausgeführt sind, dass sie einen Ladungsausgleich ohne Zwischenmodule durchführen können. Wenn beispielsweise eine Parallelschaltung der Modul-Kondensatoren aller in Figur 24 gezeigten Module während eines Ladevorganges angestrebt wird, so müssen die einzelnen Parallel-Schaltvorgänge unter Berücksichtigung der entsprechenden dargestellten Ladezustände durchgeführt werden: Zunächst wird nur der Modul-Kondensator von Modul 2410 geladen, da er mit 40% die niedrigste Ladespannung aufweist, während die übrigen Modul-Kondensatoren wenigstens über einen Anschluss nicht mit den Verbindungsleitungen der Module verbunden sind. Wenn die Spannung im Modul-Kondensator von Modul 2410 auf 50% angestiegen ist, wird der Modul-Kondensator von Modul 2440 parallel geschaltet, wobei die Modul-Kondensatoren der Module 2420 und 2430 übersprungen werden. Nun wird diese Parallelschaltung so weit geladen, bis die Spannung auf 60% angestiegen ist, so dass der Modul-Kondensator von Modul 2420 zusätzlich parallel geschaltet werden kann. Anschließend werden die drei parallel geschalteten Modul-Kondensatoren der Module 2410, 2420 und 2440 von 60% auf 70% geladen, so dass der vierte Modul-Kondensator von Modul 2430 ohne entsprechende Umladeverluste parallel geschaltet werden kann.

Figur 25 zeigt eine erste mögliche Ausführungsform für erfindungsgemäße Module, welche einen Ladungsausgleich zwischen den Modulkondensatoren 2510, 2520, 2530 ohne Zwischenmodule erlaubt. Die Schalter symbolisieren hierbei wieder jede mögliche Art von geeignetem Halbleiterschalter; insbesondere können parallel zu diesen Schaltern auch wieder entsprechend polarisierte Schutzdioden angebracht sein.

Beispielsweise kann ein Parallelschalten der Modul-Kondensatoren erreicht werden, wenn bei den Modulen die jeweiligen Schalter 2535, 2540, 2550 und 2555 geschlossen werden. Die jeweils nicht erwähnten Schalter sollen dabei stets offen bleiben. Alternativ können die Modul-Kondensatoren auch mit invertierter Polarität parallel geschaltet werden, wenn die Schalter 2535, 2540, 2545 und 2560 geschlossen werden.

Das Überspringen eines Moduls bei gleichzeitiger Parallelschaltung zu einem nachfolgenden Modul-Kondensator wird ermöglicht, wenn die Schalter 2535, 2550 und 2565 geschlossen werden. Bei einer Reihenschaltung der Modul-Kondensatoren reicht es aus, entweder nur die Schalter 2535 und 2550 zu schließen (obere Verbindungsleitung) oder nur den Schalter 2565 zu schließen (untere Verbindungsleitung).

Weiterhin können durch Schließen der Schalter 2535 und 2545 die einzelnen Modul-Kondensatoren über die obere Verbindungsleitung in Serie geschaltet werden. Alternativ können sie auch durch Schließen der Schalter 2540 und 2560 über die untere Verbindungsleitung in Serie geschaltet werden.

Schließlich kann auch eine Serienschaltung von Modul-Kondensatoren so erfolgen, dass jeweils ein nachfolgender Kondensator zum vorhergehenden invertiert geschaltet ist, indem man die Schalter 2535 und 2555 schließt. Beim jeweils nachfolgenden Modul müssen dann entsprechend die Schalter 2540 und 2550 geschlossen werden.

Figur 26 zeigt eine zweite mögliche Ausführungsform für erfindungsgemäße Module, welche einen Ladungsausgleich zwischen den Modulkondensatoren 2610, 2620, 2630 ohne Zwischenmodule erlaubt. Die Schalter symbolisieren hierbei wieder jede mögliche Art von geeignetem Halbleiterschalter; insbesondere können parallel zu diesen Schaltern auch wieder entsprechend polarisierte Schutzdioden angebracht sein. Die Module dieser Ausführungsform müssen dabei für eine Hintereinanderschaltung jeweils so verbunden werden, dass jeweils der obere und untere Anschluss eines nachfolgenden Moduls jeweils relativ zu seinem Vorgänger vertauscht wird.

Hier kann ein Parallelschalten der Modul-Kondensatoren erreicht werden, wenn jeweils die Schalter 2635, 2645 und 2655 oder die Schalter 2640, 2650 und 2655 geschlossen werden. Nicht erwähnte Schalter sind jeweils geöffnet.

Durch Schließen der Schalter 2635 und 2645 oder der Schalter 2640 und 2650 können die Modul-Kondensatoren in Serie geschaltet werden.

Wenn lediglich der Schalter 2655 geschlossen wird, kann ein Modul-Kondensator bei Parallel-Schalten des rechten und linken Nachbar-Kondensators überbrückt werden.

Schließlich kann ein Modul-Kondensator bei in Reihe-Schalten des rechten und linken Nachbar-Kondensators überbrückt werden, wenn die Schalter 2635 und 2650 oder die Schalter 2640 und 2645 geschlossen werden.

Eine Hintereinanderschaltung solcher Module kann dabei einen Brückenzweig bilden, wobei die jeweils äußeren Anschlüsse der endständigen Module entweder zusammengefasst werden können, oder einen Anschluss zum benachbarten Brückenzweig weitergeführt werden kann.

Die beiden Ausführungsformen nach den Figuren 25 und 26 zeigen beispielhaft zwei mögliche Ausführungsformen eines Umrichters mit Multilevelkonverter-Modulen, welche einerseits wahlweise eine Reihen- oder Parallelschaltung der Modul-Kondensatoren erlaubt und andererseits einen verlustarmen Ladungsausgleich unter den Modul-Kondensatoren ohne zusätzliche Zwischenmodule gestattet. Allerdings kann die erfinderische Idee auch durch andere Schalter-Kondensator-Konfigurationen realisiert werden. Insbesondere können die nach dem in den Figuren 25 und 26 beschriebenen Module natürlich noch durch weitere geschaltete oder nicht geschaltete elektrische Verbindungen zwischen den jeweiligen Modulen erweitert werden.

**Patentansprüche**

1. Elektrisches Umrichtersystem für Stromversorgungen, umfassend mindestens zwei gleichartige hintereinander geschaltete Module (710, 730, 750), die einen Teil eines Brückenzweiges des Umrichtersystems bilden, wobei jedes Modul mindestens einen Modul-Energiespeicher (1010; 1110; 1210; 1310) zur Energiespeicherung und Schaltelemente (1020, 1030, 1040; 1120, 1130, 1140, 1150) enthält, wobei die Schaltelemente die Modul-Energiespeicher hintereinandergeschalteter Module sowohl in Serie als auch parallel schalten können, und wobei die Module, mit Ausnahme des letzten Moduls in der Hintereinanderschaltung der Module, über mindestens zwei Anschlüsse mit einem nachfolgenden der hintereinander geschalteten Module verbunden sind, **dadurch gekennzeichnet, dass** mindestens zwischen einem Modul und einem nachfolgenden der hintereinander geschalteten Module ein Zwischenmodul (720, 740) geschaltet ist, das mindestens eine Induktivität (1240; 1340) zur Energiespeicherung aufweist, wobei die Module, das Zwischenmodul und die Schaltelemente so ausgeführt sind, dass dieses eine Modul und das zweite, nachfolgende der hintereinander geschalteten Module über die Schaltelemente so miteinander verbunden werden können, dass einer der mindestens zwei Anschlüsse des einen Moduls über die mindestens eine Induktivität zu dem zweiten, nachfolgenden der hintereinander geschalteten Module führt; und dass ein Energie- und Ladungstransport zwischen den Modul-Energiespeichern über die Induktivität des Zwischenmoduls nach dem Prinzip eines Schaltwandlers erfolgen kann.

2. Elektrisches Umrichtersystem nach Anspruch 1, wobei das Zwischenmodul (720, 740) aus einer Induktivität (1240) besteht und die Module jeweils zwei Serienschaltungen (1230) von je drei Schaltelementen (1020, 1030, 1040) umfassen, wobei diese Serienschaltungen parallel zum Modul-Energiespeicher (1010) liegen und jeweils die zwei Verbindungspunkte zwischen aufeinanderfolgenden Schaltern einer Serienschaltungen zwei Anschlüsse zur Verbindung des Moduls mit dem nachfolgenden der hintereinander geschalteten Module bilden und wobei jeweils der erste dieser zwei Anschlüsse direkt mit einem Anschluss des nachfolgenden der hintereinander geschalteten Module verbunden ist und jeweils der zweite dieser zwei Anschlüsse über einen Anschluss der Induktivität mit dem Anschluss des nachfolgenden der hintereinander geschalteten Module verbunden ist.

3. Elektrisches Umrichtersystem nach Anspruch 1, wobei das Zwischenmodul (720, 740) aus einer Induktivität (1340) besteht und die Module jeweils vier Serienschaltungen (1320, 1330) von je zwei Schaltelementen (1120, 1130, 1140, 1150) umfassen, wobei diese Serienschaltungen parallel zum Modul-Energiespeicher (1110; 1310) liegen und jeweils ein Verbindungspunkt der Schalter von zwei der Serienschaltungen einen von zwei Anschlüssen eines Moduls zur Verbindung des nachfolgenden der hintereinander geschalteten Module bildet und wobei jeweils der erste dieser zwei Anschlüsse direkt mit einem Anschluss des nachfolgenden der hintereinander geschalteten Module verbunden ist und jeweils der zweite dieser zwei Anschlüsse über einen Anschluss der Induktivität mit dem Anschluss des nachfolgenden der hintereinander geschalteten Module verbunden ist.

4. Elektrisches Umrichtersystem für Stromversorgungen, umfassend mindestens drei gleichartige hintereinander geschaltete Module (2410, 2420, 2430, 2440), wobei jedes Modul mindestens 4 Anschlüsse und mindestens einen Modul-Energiespeicher (2510; 2610) zur Energiespeicherung enthält, und die Module Schaltelemente (2535, 2540, 2545, 2550, 2555, 2560, 2565; 2635, 2640, 2645, 2650, 2655) enthalten, und wobei die Schaltelemente die Modul-Energiespeicher der Module sowohl in Serie als auch parallel schalten können, **dadurch gekennzeichnet, dass** die Schaltelemente der Module so ausgeführt sind, dass die Modul-Energiespeicher von Modulen, deren Parallelschaltung erfolgen soll, beginnend mit einem ersten Modul-Energiespeicher der Reihe nach im laufenden Betrieb des Umrichters zugeschaltet werden können, und dass ein Parallelschalten von Modul-Energiespeichern auch möglich ist, wenn deren Module nicht unmittelbar benachbart sind, wobei dieses Zuschalten der Module die folgenden Schritte umfasst:

Auswahl des Modul-Energiespeichers unter den Modul-Energiespeichern der geplanten Parallelschaltung mit der niedrigsten Spannung als ersten Modul-Energiespeicher, wenn ein Laststrom durch den Umrichter diesen Modul-Energiespeicher auflädt, bzw. Auswahl des Modul-Energiespeichers mit der höchsten Spannung als ersten Modul-Energiespeicher, wenn ein Laststrom durch den Umrichter diesen Modul-Energiespeicher entlädt;

Auswahl eines parallelzuschaltenden Modul-Energiespeichers mit der zweitniedrigsten Spannung, wenn ein Laststrom durch den Umrichter den ersten Modul-Energiespeicher auflädt, bzw. Auswahl eines parallelzuschaltenden Modul-Energiespeichers mit der zweihöchsten Spannung, wenn ein Laststrom durch den Umrichter den ersten Modul-Energiespeicher entlädt;

Parallelschalten dieses ausgewählten parallelzuschaltenden Modul-Energiespeichers zum ersten Modul-Energiespeicher, wenn der Laststrom durch den Umrichter den ersten Modul-Energiespeicher so weit aufgeladen bzw. entladen hat, dass er die gleiche Spannung wie der ausgewählte parallelzuschaltende Modul-Energiespeicher hat; und

Wiederholung der vorigen beiden Schritte, bis alle Modul-Energiespeichern deren Parallelschaltung erfolgen soll miteinander parallel geschaltet sind.

5. Elektrisches Umrichtersystem nach Anspruch 4, welches zumindest drei gleichartige hintereinander geschaltete Module (2410, 2420, 2430, 2440) umfasst, wobei die Module (2410, 2420, 2430, 2440) jeweils zwei parallel zum Modul-Energiespeicher (2510) liegende Serienschaltungen von je zwei Schaltelementen (2545, 2550, 2555, 2560) umfassen, wobei die Mittelpunkte dieser Serienschaltungen zwei Anschlüsse des Moduls zum ersten benachbarten Modul bilden, wobei weiterhin zwei weitere Anschlüsse des Moduls zum zweiten benachbarten Modul gebildet werden über je ein weiteres Schaltelement (2535, 2540) zu den Anschlüssen des Modul-Energiespeichers und wobei über ein weiteres Schaltelement (2565) eine Verbindung von einem Anschluss zum ersten benachbarten Modul zu einem Anschluss zum zweiten benachbarten Modul bildet.

6. Elektrisches Umrichtersystem nach Anspruch 4, welches zumindest drei gleichartige hintereinander geschaltete Module (2410, 2420, 2430, 2440) umfasst, wobei die Module (2410, 2420, 2430, 2440) jeweils zwei parallel zum Modul-Energiespeicher (2610) liegende Serienschaltungen von je zwei Schaltelementen (2635, 2640, 2645, 2650) umfassen, wobei die Anschlüsse zum ersten benachbarten Modul direkt mit den Mittelpunkten dieser Serienschaltungen verbunden sind und wobei die Anschlüsse zum zweiten, benachbarten Modul einmal direkt und einmal über ein weiteres Schaltelement (2655) mit den Mittelpunkten dieser Serienschaltungen verbunden ist.

7. Elektrisches Umrichtersystem für Stromversorgungen nach Anspruch 4, wobei die Module (2410, 2420, 2430, 2440) so ausgeführt sind, dass der Modul-Energiespeicher (2530; 2630) eines nicht direkt benachbarten Moduls zum ersten Modul-Energiespeicher (2510; 2610) parallel geschaltet werden kann, ohne dass der oder die Modul-Energiespeicher (2520; 2620) dazwischen liegender Module parallel oder in Serie zum ersten Modul-Energiespeicher geschaltet sind.

8. Elektrisches Umrichtersystem für Stromversorgungen nach Anspruch 4, weiterhin umfassend eine Steuerschaltung, welche einerseits die gemessenen Spannungen der Modul-Energiespeicher (2510, 2520, 2530; 2610, 2620, 2630) in eine den Modulen zugeordnete Reihenfolge bringen kann und andererseits die Module so ansteuert, dass die oben beschriebene zeitliche Abfolge der Parallelschaltung von Modul-Energiespeichern realisiert werden kann.

9. Elektrisches Umrichtersystem nach einem der vorhergehenden Ansprüche, wobei die Schaltelemente jedes Moduls (710, 730, 750; 2410, 2420, 2430, 2440) so ausgeführt sind, dass über eine Gruppe aus einem oder mehreren Modulen eine elektrische Verbindung von einem links an die Gruppe angrenzenden Modul zu einem rechts an die Gruppe angrenzenden Modul in der Weise hergestellt werden kann, dass der oder die Modul-Energiespeicher der Gruppe nicht geladen oder entladen werden.

10. Elektrisches Umrichtersystem nach einem der vorhergehenden Ansprüche, wobei die mindestens zwei oder mindestens drei gleichartigen hintereinander geschalteten Module einen Brückenzweig mit zwei äußeren Leistungsanschlüssen bilden, wobei sich die Spannung an diesen äußeren Leistungsanschlüssen aus der Spannung aller in Reihe oder parallel geschalteten Modul-Energiespeicher ergibt, wobei vorzugsweise jeweils zwei in Serie geschaltete Brückenzweige ein Phasenmodul eines ein- oder mehrphasigen Stromrichters bilden.

11. Elektrisches Umrichtersystem nach einem der vorhergehenden Ansprüche, wobei die Schaltelemente als bipolare Transistoren, als IGBTs, als MOSFETs, als Thyristoren oder als GTOs ausgeführt sind, und/oder wobei zusätzlich parallel zu den Schaltelementen Dioden liegen und die Dioden so geschaltet sind, dass sie die Schaltelemente vor Verpolung und Überspannung schützen.

12. Elektrisches Umrichtersystem nach einem der vorhergehenden Ansprüche, wobei das Umrichtersystem nach dem Prinzip der Pulsweitenmodulation arbeitet und die Stromstärke über das Tastverhältnis der Pulsweitemodulation verändert.

13. Elektrisches Umrichtersystem nach einem der vorhergehenden Ansprüche, wobei das Umrichtersystem weiterhin eine Messschaltung umfasst, welche die Spannungswerte der einzelnen Modul-Energiespeicher misst.

14. Verfahren zur Ansteuerung eines Umrichters für Stromversorgungen, wobei der Umrichter mindestens zwei gleichartige hintereinander geschaltete Module (710, 730, 750) umfasst und wobei jedes Modul Schaltelemente (1020, 1030, 1040; 1120, 1130, 1140, 1150) und mindestens 4 Anschlüsse aufweist und mindestens einen Modul-Energiespeicher (1010; 1110; 1210; 1310) zur Energiespeicherung enthält und wobei weiterhin mindestens zwischen einem Modul und einem nachfolgenden der hintereinander geschalteten Module ein Zwischenmodul geschaltet ist, das mindestens eine Induktivität (1240; 1340) zur Energiespeicherung aufweist, wobei das Verfahren die folgenden Schritte umfasst:

Auswählen einer Einstellung der Schaltelemente eines Moduls, dass wahlweise entweder eine direkte elektrische Verbindung über mindestens einen seiner Anschlüsse von einem ersten zu dem Modul benachbarten Modul zu einem zweiten zu dem Modul benachbarten Modul erfolgt, oder dass der Modul-Energiespeicher des Moduls über einen Anschluss zu einem Modul-Energiespeicher eines benachbarten Moduls in Serie geschaltet wird oder dass der Modul-Energiespeicher des Moduls über zwei Anschlüsse zu einem Modul-Energiespeicher eines benachbarten Moduls parallel geschaltet wird; und
Steuern der Schaltelemente so, dass ein Energie- und Ladungstransport zwischen den Modul-Energiespeichern über die Induktivität des Zwischenmoduls nach dem Prinzip eines Schaltwandlers erfolgen kann, so dass Spannungen von Modul-Energiespeichern die parallel geschaltet werden sollen vor dem Parallelschalten auf einen gleichen Wert gebracht werden.

15. Verfahren zur Ansteuerung eines Umrichters für Stromversorgungen, wobei der Umrichter mindestens drei gleichartige hintereinander geschaltete Module (2410, 2420, 2430, 2440) umfasst und wobei jedes Modul Schaltelemente (2535, 2540, 2545, 2550, 2555, 2560, 2565; 2635, 2640, 2645, 2650, 2655) und mindestens 4 Anschlüsse aufweist und mindestens einen Modul-Energiespeicher (2510; 2610) zur Energiespeicherung enthält, wobei das Verfahren die folgenden Schritte umfasst:
Auswählen einer Einstellung der Schaltelemente eines Moduls, so dass wahlweise entweder eine direkte elektrische Verbindung über mindestens einen seiner Anschlüsse eines ersten zu dem Modul benachbarten Moduls zu einem zweiten, zu dem Modul benachbarten Modul erfolgt, oder dass der Modul-Energiespeicher des Moduls über einen Anschluss zu einem Modul-Energiespeicher eines benachbarten Moduls (2520; 2620) in Serie geschaltet wird, oder dass der Modul-Energiespeicher des Moduls über zwei Anschlüsse zu dem Modul-Energiespeicher eines benachbarten Moduls parallel geschaltet wird, wobei das Parallelschalten von Modul-Energiespeichern von Modulen, deren Parallelschaltung erfolgen soll, beginnend mit einem ersten Modul-Energiespeicher der Reihe nach im laufenden Betrieb des Umrichters geschieht, wobei dieses Zuschalten der Module die folgenden Teilschritte umfasst:

Auswahl des Modul-Energiespeichers unter den Modul-Energiespeichern der geplanten Parallelschaltung mit der niedrigsten Spannung als ersten Modul-Energiespeicher, wenn ein Laststrom durch den Umrichter diesen Modul-Energiespeicher auflädt, bzw. Auswahl des Modul-Energiespeichers mit der höchsten Spannung als ersten Modul-Energiespeicher, wenn ein Laststrom durch den Umrichter diesen Modul-Energiespeicher entlädt;
Auswahl eines parallelzuschaltenden Modul-Energiespeichers mit der zweitniedrigsten Spannung, wenn ein Laststrom durch den Umrichter den ersten Modul-Energiespeicher auflädt, bzw. Auswahl eines parallelzuschaltenden Modul-Energiespeichers mit der zweihöchsten Spannung, wenn ein Laststrom durch den Umrichter den ersten Modul-Energiespeicher entlädt;
Parallelschalten dieses ausgewählten parallelzuschaltenden Modul-Energiespeichers zum ersten Modul-Energiespeicher, wenn der Laststrom durch den Umrichter den ersten Modul-Energiespeicher so weit aufgeladen bzw. entladen hat, dass er die gleiche Spannung wie der ausgewählte parallelzuschaltende Modul-Energiespeicher hat; und
Wiederholung der vorigen beiden Schritte, bis alle Modul-Energiespeicher deren Parallelschaltung erfolgen soll miteinander parallel geschaltet sind.

## Claims

1. An electrical converter for power supplies, comprising at least two cascaded modules (710, 730, 750) of the same kind forming part of a bridge branch of the converter system, wherein each module comprises at least one module energy storage (1010; 1110; 1210; 1310) for energy storage and switching elements (1020, 1030, 1040; 1120, 1130, 1140, 1150), wherein the switching elements are able to switch the module energy storages of the cascaded modules both in series and in parallel, and wherein the modules are, except for the last module in the cascaded connection of modules, connected to a subsequent module in the chain of cascaded modules via at least two connections, **characterized in that**

   an intermediate module (720, 740) is connected between at least one module and a subsequent module in the chain of sequentially connected modules, which intermediate module has at least one inductor (1240; 1340) for energy storage, wherein the modules, the intermediate module and the switching elements are configured such that

   said one module and the second succeeding consecutively connected module can be connected to each other via the switching elements in such manner that one of the at least two connections of the one module is connected via the at least one inductor to the second following module in the module chain; and that
   an energy and charge transfer can take place between the module energy storages via the inductor of the intermediate module according to the principle of a switching converter.

2. The electrical converter according to claim 1, wherein the intermediate module (720, 740) consists of an inductor (1240), and each of the modules comprises two series circuits (1230) consisting of three switching elements (1020, 1030, 1040), wherein these series-circuits are arranged parallel with module energy storage (1010) and the two connection points between consecutive switches in a series circuit form the respective two terminals for connecting the module with the next of the cascaded modules, and wherein each first of these two terminals is connected directly to a terminal of the subsequent one of the cascaded modules, and each second of these two terminals is connected to the terminal of the subsequent cascaded module via a terminal of the inductor.

3. The electrical converter according to claim 1, wherein the intermediate module (720, 740) consists of an inductor (1340), each of the modules has four series circuits (1320, 1330) each consisting of two switching elements (1120, 1130, 1140, 1150), wherein said series circuits are aligned parallel with the module energy storage (1110; 1310) and one connecting point of each of the switches of two of the series circuits forms one of two terminals of a module for connecting the next in the cascaded modules, and wherein the first of each of said two terminals is connected directly to a terminal of the subsequent one of the cascaded modules, and the second of each of said two terminals is connected to the terminal of the subsequent cascaded module via a terminal of the inductor.

4. An electrical converter for power supply, comprising at least three cascaded modules (2410, 2420, 2430, 2440) of the same kind, wherein each module comprises at least 4 terminals and at least one module energy storage (2510; 2610) for energy storage, and the modules include switching elements (2535, 2540, 2545, 2550, 2555, 2560, 2565; 2635, 2640, 2645, 2650, 2655), and wherein the switching elements can switch the module energy storages of the modules both in series and in parallel, **characterized in that**
   the switching elements of the modules are designed such that the module energy storages of modules, that are to be connected in parallel can be actuated in order during operation, and that the parallel connection of module energy storages is also possible when their modules are not directly adjacent, starting with a first module energy storage, wherein said actuation of the modules comprises the following steps:

   selecting the module energy storage among the module energy storages for the planned parallel connection that has the lowest voltage as the first module energy storage when a load current through the inverter charges said module energy storage, or selecting the module energy storage that has the highest voltage as the first module energy storage when a load current through the inverter discharges said module energy storage;
   selecting a module energy storage to be connected in parallel with the second lowest voltage when a load current through the inverter charges the first module energy storage, or selecting a module energy storage to be connected in parallel with the second highest voltage when a load current through the inverter discharges the first module energy storage;

connecting said selected module energy storage to be connected in parallel to the first module energy storage, when the load current through the converter has charged or discharged the first module energy storage to the point that it has the same voltage as the selected module energy storage for connection in parallel; and repeating the previous two steps until all module energy storages that are to be connected in parallel have been connected in parallel with each other.

5. The electrical converter according to claim 4, which comprises at least three cascaded modules (2410, 2420, 2430, 2440) of same kind, wherein the modules (2410, 2420, 2430, 2440) each comprise two series circuits of two switching elements (2545, 2550, 2555, 2560), aligned parallel to the module energy storage (2510), wherein the centers of said series circuits form two connections between the module and the first adjacent module, wherein in addition two further connections between the module and the second adjacent module are also each formed via a further switching element (2535, 2540) to the terminals of the module energy storage, and wherein a connection from a terminal to the first adjacent module is formed to a terminal to the second adjacent module via a further switching element (2565).

6. The electrical converter according to claim 4, which comprises at least three cascaded modules (2410, 2420, 2430, 2440) of same kind, wherein the modules (2410, 2420, 2430, 2440) each comprise two series circuits consisting of two switching elements (2635, 2640, 2645, 2650) aligned parallel with the module energy storage (2610), wherein the terminals to the first adjacent module are connected directly with the center points of said series circuits, and wherein one of the terminals to the second adjacent module is connected to one center point of said series circuits directly and the other is connected to the other center point via a further switching element (2655).

7. The electrical converter for power supply according to claim 4, wherein the modules (2410, 2420, 2430, 2440) are designed such that the module energy storage (2530; 2630) of a module that is not immediately adjacent to the first module energy storage (2510; 2610) can be connected in parallel without the one or more module energy storages (2520; 2620) of modules therebetween being connected to the first module energy storage in parallel or in series.

8. The electrical converter for power supply according to claim 4, further comprising a control circuit which is able to bring the measured voltages of the module energy storages (2510, 2520, 2530; 2610, 2620, 2630) into an order allocated to the modules, and also actuates the modules in such manner the chronological sequence of connection in parallel of module energy storages as described above can be carried out.

9. The electrical converter according to any one of the preceding claims, wherein the switching elements of each module (710, 730, 750; 2410, 2420, 2430, 2440) are designed such that an electrical connection can be created across a group of one or more modules, from a module immediately to the left of the group to a module immediately to the right of the group in such a manner that the one or more module energy storages of the group is/are not charged or discharged.

10. The electrical converter according to any one of the preceding claims, wherein the at least two cascaded modules of the same kind form a bridge branch with two external power terminals, wherein the voltage at these outer power terminals is obtained from the voltage of all the module energy storages connected in series or parallel, wherein two series-connected bridge branches preferably each form a phase module of a single-phase or multi-phase power converter.

11. The electrical converter according to any one of the preceding claims, wherein the switching elements are embodied as bipolar transistors, IGBTs, MOSFETs, thyristors or GTOs, and/or wherein diodes are also aligned parallel with the switching elements, and the diodes are connected such that they protect the switching elements from polarity reversal and overvoltage.

12. The electrical converter according to any one of the preceding claims, wherein the converter operates according to the principle of pulse width modulation and changes the current strength via the pulse width modulation duty cycle.

13. The electrical converter according to any one of the preceding claims, wherein the converter further comprises a measuring circuit which measures the voltage values of each of the module energy storages.

14. A method for controlling a converter for power supply, wherein the converter comprises at least two cascaded modules (710, 730, 750) of the same kind, and wherein each module comprises switching elements (1020, 1030, 1040; 1120, 1130, 1140, 1150) and at least 4 terminals and at least one module energy storage (1010; 1110; 1210; 1310) for energy storage, and wherein further an intermediate module is connected between at least one module and a subsequent one of the cascaded connected modules, which intermediate module has at least one inductor (1240; 1340) for energy storage, wherein the method comprises the following steps:

selecting a setting of the switching elements of a module so that optionally either a direct electrical connection is created via at least one of the terminals thereof from a first module adjacent to the module to a second module adjacent to the module, or so that the module energy storage of the module is connected in series to a module energy storage of an adjacent module via a terminal, or that the module energy storage of the module is connected in parallel to a module energy storage of an adjacent module via two terminals; and

controlling the switching elements such that an energy and charge transport can be performed between the module energy storages via the inductor of the intermediate module according to the principle of a switching converter, so that voltages of module energy storages to be connected in parallel are brought to the same value before the parallel connection is made.

15. A method for controlling a converter for power supply, wherein the converter comprises at least three cascaded modules (2410, 2420, 2430, 2440) of the same kind, and wherein each module comprises switching elements (2535, 2540, 2545, 2550, 2555, 2560, 2565; 2635, 2640, 2645, 2650, 2655) and at least 4 terminals and at least one energy storage module (2510; 2610) for energy storage, wherein the method comprises the following steps:

selecting a setting of the switching elements of a module so that optionally either a direct electrical connection is created via at least one of the terminals thereof from a first module adjacent to the module to a second module adjacent to the module, or so that the module energy storage of the module is connected in series to a module energy storage of an adjacent module (2520; 2620) via a terminal, or that the module energy storage of the module is connected in parallel to a module energy storage of an adjacent module via two terminals; wherein the parallel connection of module energy storages that are to be connected in parallel is carried out during operation of the converter and in order starting with a first module energy storage, wherein this actuation of the modules includes the following substeps:

From the module energy storages of the intended parallel connection, selecting the module energy storage with the lowest voltage as the first module energy storage when a load current through the converter charges this module energy storage, or selecting the module energy storage with the highest voltage as the first module energy storage when a load current through the converter discharges this module energy storage;

Selecting a module energy storage to be connected in parallel that has the second lowest voltage when a load current through the converter charges the first module energy storage, or selecting a module energy storage to be connected in parallel that has the second highest voltage when a load current through the converter discharges the first module energy storage;

Connecting this module energy storage intended for parallel connection in parallel with the first module energy storage when the load current through the converter has charged or discharged the first module energy storage to the point that is has the same voltage as the module energy storage that is to be connected in parallel; and

Repeating the preceding two steps until all module energy storages that are to be connected in parallel have been connected in parallel to each other.

**Revendications**

1. Système de convertisseur électrique pour alimentations électriques, comprenant au moins deux modules (710, 730, 750) de même type branchés l'un derrière l'autre, qui forment une partie d'une branche de pont du système de convertisseur, chaque module contenant au moins un accumulateur d'énergie de module (1010; 1110; 1210; 1310) pour l'accumulation d'énergie et des éléments de commutation (1020, 1030, 1040; 1120, 1130, 1140, 1150), les éléments de commutation pouvant brancher les accumulateurs d'énergie des modules branchés les uns derrière les autres aussi bien en série qu'en parallèle et les modules à l'exception du dernier module dans le branchement successif des modules, sont reliés, par l'intermédiaire d'au moins deux raccordements, avec un module suivant des modules branchés les uns derrière les autres, **caractérisé en ce que**

au moins entre un module et un module suivant des modules branchés les uns derrière les autres, est branché un module intermédiaire (720, 740) qui comprend au moins une inductance (1240; 1340) pour l'accumulation d'énergie, les modules, le module intermédiaire et les éléments de commutation étant conçus de façon à ce que

ce module et le deuxième module suivant des modules branchés les uns derrière les autres peuvent être reliés entre eux par l'intermédiaire des éléments de commutation de façon à ce qu'un des au moins deux raccordements d'un module conduise, par l'intermédiaire de l'au moins une inductance, vers le deuxième module suivant des modules branchés les uns derrière les autres ; et **en ce que**

un transport d'énergie et de charges entre les accumulateurs d'énergie du module peut avoir lieu par l'intermédiaire de l'inductance du module intermédiaire selon le principe d'un convertisseur de commutation.

2. Système de convertisseur électrique selon la revendication 1, le module intermédiaire (720, 740) étant constitué d'une inductance (1240) et les modules comprenant chacun deux branchements en série (1230) de trois éléments de commutation (1020, 1030, 1040) chacun, ces branchements en série étant parallèles à l'accumulateur d'énergie du module (1010) et les deux points de liaison entre des commutateurs successifs d'un branchement en série constituant deux raccordements pour la liaison du module avec le module suivant des modules branchés les uns derrière les autres et le premier de ces deux raccordements étant directement relié avec un raccordement du module suivant des modules branchés les uns derrière les autres et le deuxième de ces deux raccordements étant relié, par l'intermédiaire d'un raccordement de l'inductance, avec le raccordement du module suivant des modules branchés les uns derrière les autres.

3. Système de convertisseur électrique selon la revendication 1, le module intermédiaire (720, 740) étant constitué d'une inductance (1340) et les modules comprenant chacun quatre branchements en série (1320, 1330) de deux éléments de commutation (1120, 1130, 1140, 1150) chacun, ces branchements en série étant parallèle à l'accumulateur d'énergie du module (1110; 1310) et un point de liaison des commutateurs de deux des branchements en série constitue un raccordement parmi deux raccordements d'un module pour la liaison du module suivant des modules branchés les uns derrière les autres et le premier de ces deux raccordements étant relié directement avec un raccordement du module suivant des modules branchés les uns derrière les autres et le deuxième de ces deux raccordements étant relié, par l'intermédiaire d'un raccordement de l'inductance, avec le raccordement du module suivant des modules branchés les uns derrière les autres.

4. Système de convertisseur électrique pour alimentations électriques, comprenant au moins trois modules (2410, 2420, 2430, 2440) de même type branchés les uns derrière les autres, chaque module contenant au moins 4 raccordements et au moins un accumulateur d'énergie de module (2510; 2610) pour l'accumulation de l'énergie et les modules contenant des éléments de commutation (2535, 2540, 2545, 2550, 2560, 2565 ; 2635, 2640, 2645, 2650, 2655) et les éléments de commutation pouvant brancher les accumulateurs d'énergie des modules aussi bien en série qu'en parallèle, **caractérisé en ce que**

les éléments de commutation des modules sont conçus de façon à ce que les accumulateurs des modules qui doivent être branchés en parallèle, peuvent être activés, en commençant avec un premier accumulateur d'énergie dans l'ordre pendant le fonctionnement du convertisseur et à ce qu'un branchement en parallèle d'accumulateurs d'énergie soit également possible lorsque les modules ne sont pas immédiatement adjacents, cette activation des modules comprenant les étapes suivantes :

sélection de l'accumulateur d'énergie parmi les accumulateurs d'énergie du branchement en parallèle prévu avec la tension la plus basse en tant que premier accumulateur d'énergie de module, lorsqu'un courant de charge à travers le convertisseur charge cet accumulateur d'énergie, ou sélection de l'accumulateur d'énergie avec la tension la plus élevée en tant qu'accumulateur d'énergie du module lorsqu'un courant de charge à travers le convertisseur décharge cet accumulateur d'énergie ;
sélection d'un accumulateur d'énergie à brancher en parallèle avec la deuxième tension la plus basse lorsqu'un courant de charge à travers le convertisseur charge le premier accumulateur d'énergie ou sélection d'un accumulateur d'énergie à brancher en parallèle avec la deuxième tension la plus élevée lorsqu'un courant de charge à travers le convertisseur décharge le premier accumulateur d'énergie ;
branchement en parallèle de cet accumulateur d'énergie sélectionné pour être branché en parallèle avec le premier accumulateur d'énergie du module lorsque le courant de charge à travers le convertisseur a chargé ou déchargé le premier accumulateur d'énergie du module jusqu'à ce qu'il ait la même tension que l'accumulateur d'énergie sélectionné pour être branché en parallèle ; et
répétition des deux étapes précédentes jusqu'à ce que tous les accumulateurs d'énergie dont le branchement en parallèle doit être effectué soient branchés en parallèle entre eux.

5. Système de convertisseur électrique selon la revendication 4, qui comprend au moins trois modules (2410, 2420, 2430, 2440) de même type branchés les uns derrière les autres, les modules (2410, 2420, 2430, 2440) comprenant chacun deux branchements en série, parallèles à l'accumulateur d'énergie du module (2510), de deux éléments (2545, 2550, 2555, 2560) chacun, les centres de ces branchements en série constituant deux raccordements du module au premier module adjacent, en outre deux autres raccordements du module au deuxième module adjacent étant formés par l'intermédiaire d'un élément de commutation supplémentaire (2535, 2540) avec les raccordements de l'accumulateur d'énergie du module et, par l'intermédiaire d'un élément de commutation supplémentaire (2565), formant une liaison d'un raccordement au premier module adjacent avec un raccordement au deuxième module adjacent.

**6.** Système de convertisseur électrique selon la revendication 4, qui comprend au moins trois modules (2410, 2420, 2430, 2440) de même type branchés les uns derrière les autres, les modules (2410, 2420, 2430, 2440) comprenant chacun deux branchements en série, parallèles à l'accumulateur d'énergie du module (2610), de deux éléments de commutation (2635, 2640, 2645, 2650), chacun, les raccordements au premier module adjacent étant reliés directement avec les centres de ces branchements en série et les raccordements au deuxième module adjacent étant reliés une fois directement et une fois par l'intermédiaire d'un élément de commutation supplémentaire (2655) avec les centres de ces branchements en série.

**7.** Système de convertisseur électrique pour alimentations électriques selon la revendication 4, les modules (2410, 2420, 2430, 2440) étant conçus de façon à ce que l'accumulateur d'énergie du module (2530; 2630) d'un module non directement adjacent puisse être branché en parallèle au premier accumulateur d'énergie de module (2510; 2610) sans que l'accumulateur ou les accumulateurs d'énergie (2520; 2620) de modules situés entre eux soient branchés en parallèle ou en série au premier accumulateur d'énergie.

**8.** Système de convertisseur électrique pour alimentations électriques selon la revendication 4, comprenant en outre un circuit de commande qui d'une part, peut amener les tensions mesurées des accumulateurs d'énergie des modules (2510, 2520, 2530 ; 2610, 2620, 2630) dans un ordre correspondant aux modules et d'autre part contrôle les modules de façon à ce que le déroulement temporel, décrit ci-dessus, du branchement en parallèle d'accumulateurs d'énergie puisse être réalisé.

**9.** Système de convertisseur électrique selon l'une des revendications précédentes, les éléments de commutation de chaque module (710, 730, 750 ; 2410, 2420, 2430, 2440) étant conçus de façon à ce que, par l'intermédiaire d'un groupe constitué d'un ou de plusieurs modules, une liaison électrique d'un module adjacent à gauche au groupe avec un module adjacent à droite au groupe puisse être établie de façon à ce que l'accumulateur ou les accumulateurs du groupe ne soient pas chargés ou déchargés.

**10.** Système de convertisseur électrique selon l'une des revendications précédentes, les au moins deux ou au moins trois modules de même type branchés les uns derrière les autres constituent une branche de pont avec deux raccordements de puissance externe, la tension au niveau de ces raccordements de puissance externe résultant de la tension de tous les accumulateurs d'énergie des modules branchés en série ou en parallèle, de préférence deux branches du pont branchées en série constituant un module de phase d'un convertisseur de courant mono-phase ou multi-phase.

**11.** Système de convertisseur électrique selon l'une des revendications précédentes, les éléments de commutations étant conçus comme des transistors bipolaires, des IGBT, des MOSFET, des thyristors ou des GTO et/ou des diodes étant branchées en parallèle aux éléments de commutation, ces diodes étant branchées de façon à protéger les éléments de commutation contre une polarité inversée et une surtension.

**12.** Système de convertisseur électrique selon l'une des revendications précédentes, le système de convertisseur fonctionnant selon le principe de la modulation de largeur d'impulsion et modifiant l'intensité du courant par l'intermédiaire du rapport cyclique de la modulation de largeur d'impulsion.

**13.** Système de convertisseur électrique selon l'une des revendications précédentes, le système de convertisseur comprenant en outre un circuit de mesure qui mesure les valeurs de tension des différents accumulateurs d'énergie des modules.

**14.** Procédé de contrôle d'un convertisseur pour alimentations électriques, le convertisseur comprenant au moins deux modules (710, 730, 750) de même type branchés l'un derrière l'autre et chaque module comprenant des éléments de commutation (1020, 1030, 1040; 1120, 1130, 1140, 1150) et au moins 4 raccordements et contenant au moins un accumulateur d'énergie de module (1010; 1110; 1210; 1310) pour l'accumulation d'énergie et outre au moins un module intermédiaire étant branché entre un module et un module suivant des modules branchés les uns derrière les autres, qui comprend au moins une inductance (1240; 1340) pour l'accumulation d'énergie, ce procédé comprenant les étapes suivantes :

sélection d'un réglage des éléments de commutation d'un module, de façon à ce que soit réalisée soit une liaison électrique directe, par l'intermédiaire d'au moins un de ses raccordements, d'un premier module adjacent au module à un deuxième module adjacent au module ou de façon à ce que l'accumulateur d'énergie du module soit branché en série, par l'intermédiaire d'un raccordement, à un accumulateur d'énergie d'un module adjacent ou de façon à ce que l'accumulateur d'énergie du module soit branché en parallèle, par l'intermédiaire de deux raccordements, à un accumulateur d'énergie d'un module adjacent ; et

contrôle des éléments de commutation de façon à ce qu'un transport d'énergie et de charge puisse avoir lieu entre les accumulateurs d'énergie par l'intermédiaire de l'inductance du module intermédiaire selon le principe d'un convertisseur de commutation, de façon à ce que les tensions des accumulateurs d'énergie qui doivent être branchés en parallèle soient amenées à la même valeur avant le branchement en parallèle.

15. Procédé de contrôle d'un convertisseur pour alimentations électriques, le convertisseur comprenant au moins trois modules (2410, 2420, 2430, 2440) de même type branchés les uns derrière les autres, chaque module contenant contenant des éléments de commutation (2535, 2540, 2545, 2550, 2560, 2565; 2635, 2640, 2645, 2650, 2655) et au moins 4 raccordements et au moins un accumulateur d'énergie de module (2510; 2610) pour l'accumulation de l'énergie, ce procédé comprenant les étapes suivantes :

sélection d'un réglage des éléments de commutation d'un module, de façon à ce que soit réalisée soit une liaison électrique directe, par l'intermédiaire d'au moins un de ses raccordements, d'un premier module adjacent au module à un deuxième module adjacent au module ou de façon à ce que l'accumulateur d'énergie du module soit branché en série, par l'intermédiaire d'un raccordement, à un accumulateur d'énergie d'un module adjacent (2520; 2620) ou de façon à ce que l'accumulateur d'énergie du module soit branché en parallèle, par l'intermédiaire de deux raccordements, à un accumulateur d'énergie d'un module adjacent, le branchement en parallèle des accumulateurs d'énergie des modules dont le branchement en parallèle doit être réalisé ayant lieu en commençant avec un premier accumulateur d'énergie dans l'ordre pendant le fonctionnement du convertisseur et cette activation des modules comprenant les étapes partielles suivantes :

sélection de l'accumulateur d'énergie parmi les accumulateurs d'énergie du branchement en parallèle prévu avec la tension la plus basse en tant que premier accumulateur d'énergie de module, lorsqu'un courant de charge à travers le convertisseur charge cet accumulateur d'énergie, ou sélection de l'accumulateur d'énergie avec la tension la plus élevée en tant qu'accumulateur d'énergie du module lorsqu'un courant de charge à travers le convertisseur décharge cet accumulateur d'énergie ;

sélection d'un accumulateur d'énergie de module à brancher en parallèle avec la deuxième tension la plus basse lorsqu'un courant de charge à travers le convertisseur charge le premier accumulateur d'énergie de module ou sélection d'un accumulateur d'énergie de module à brancher en parallèle avec la deuxième tension la plus élevée lorsqu'un courant de charge à travers le convertisseur décharge le premier accumulateur d'énergie de module ;

branchement en parallèle de cet accumulateur d'énergie sélectionné pour être branché en parallèle avec le premier accumulateur d'énergie de module lorsque le courant de charge à travers le convertisseur a chargé ou déchargé le premier accumulateur d'énergie du module jusqu'à ce qu'il ait la même tension que l'accumulateur d'énergie sélectionné pour être branché en parallèle ; et

répétition des deux étapes précédentes jusqu'à ce que tous les accumulateurs d'énergie dont le branchement en parallèle doit être effectué soient branchés en parallèle entre eux.

**Figur 1**

**Figur 2**

**Phasenmodul**

Sammelschiene

Modul

Modul

Modul

Brückenzweige

Modul

Modul

Modul

Sammelschiene

**Figur 3**

**Figur 4**

**Figur 5**

Figur 6

**Figur 7**

**Figur 8**

**Figur 9**

Figur 10

Figur 11

Figur 12

1320  1330  1340  1370

1310

1350

**Figur 13**

1360

1420  1430

1410

1450

1440

**Figur 14**

1520  1530  1535

1510

1550

1540

**Figur 15**

**Figur 16**

**Figur 17**

**Figur 18**

**Figur 19**

**Figur 20**

**Figur 21**

**Figur 22**

**Figur 23**

**Figur 24**

**Figur 25**

**Figur 26**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10217889 A1
- DE 102010052934
- WO 2009135528 A1
- WO 2008046772 A

**In der Beschreibung aufgeführte Nicht-Patentliteratur**

- Dual inverter space vector modulation with power balancing capability. **GABRIELE GRANDI et al.** EUROCON 2009, EUROCON '09. IEEE. IEEE, 18. Mai 2009, 721-728